# EUROPEAN PATENT APPLICATION

(11) **EP 4 715 533 A1**
(43) Date of publication of application: **25.03.2026**
(21) Application number: 24856780.2
(22) Date of filing: 20.08.2024
(51) Int. Cl.: G06F 3/01, G06T 19/00, G06F 1/16, G06F 3/04842, G06F 3/04883

(54) **WEARABLE DEVICE FOR PERFORMING CALL BY USING VIRTUAL OBJECT, AND CONTROL METHOD THEREOF**

(30) Priority: 22.08.2023 KR 20230109602; 23.11.2023 KR 20230164472
(71) Applicant: Samsung Electronics Co., Ltd., Suwon-si, Gyeonggi-do 16677 (KR)
(72) Inventor: SON, Dongil, Suwon-si Gyeonggi-do 16677 (KR); JEON, Yongjoon, Suwon-si Gyeonggi-do 16677 (KR); PARK, Sungkweon, Suwon-si Gyeonggi-do 16677 (KR)
(74) Representative: Nederlandsch Octrooibureau
(86) International application number: PCT/KR2024/012293
(87) International publication number: WO 2025/042169

(57) **Abstract**

Disclosed are a wearable device for performing a call by using a virtual object, and a control method thereof. The wearable device according to an embodiment of the present disclosure comprises: a display; a memory; and a processor including a processing circuit, wherein the memory stores instructions executable by the processor and the at least one processor may be configured to individually and/or integrally cause the wearable device to: obtain a first user input for making a call; control the display such that a first virtual object corresponding to the other party of the call is shown to a user wearing the wearable device on the basis of the obtaining of the first user input; obtain a second user input for moving the first virtual object to a designated position in the real world or virtual reality; and perform the call with the other party on the basis of the obtaining of the second user input.

## Description

### [Technical Field]

The disclosure relates to a wearable device performing a call using a virtual object and a method for controlling the same.

### [Background Art]

More and more services and additional functions are being provided through electronic devices, e.g., augmented reality/virtual reality devices, or other portable electronic devices. To meet the needs of various users and raise use efficiency of electronic devices, communication service carriers or device manufacturers are competing to develop electronic devices with differentiated and diversified functionalities. Accordingly, various functions that are provided through wearable devices are evolving more and more.

The above-described information may be provided as related art for the purpose of helping understanding of the disclosure. No claim or determination is made as to whether any of the foregoing is applicable as background art in relation to the disclosure.

### [Disclosure of Invention]

### [Solution to Problems]

According to the related art, when a wearable device providing augmented reality (AR)/virtual reality (VR) is worn to make a call or collaborate with another user, a designated application may be executed, and the recipient may be specified by the operation of selecting a recipient on the corresponding application, and a call may be performed. However, this is the result of performing a call by applying a call scenario according to the prior art to the VR/AR device as it is, and there is no call performing method reflecting the characteristics of the AR/VR.

Embodiments of the disclosure may provide a wearable device capable of providing usability such as receiving a telepresence service from a user by performing a call (e.g., sending and/or receiving a call) through a virtual object (e.g., an avatar).

Embodiments of the disclosure may provide a method for controlling a wearable device capable of providing usability such as receiving a telepresence service from a user by performing a call (e.g., sending and/or receiving a call) through a virtual object (e.g., an avatar).

A wearable device according to an example embodiment of the disclosure may comprise a display, memory, and at least one processor comprising processing circuitry.

According to an example embodiment, the memory may store instructions that may be executed by at least one processor, at least one processor, individually and/or collectively, may be configured to cause the wearable device to obtain a first input for sending a call.

According to an example embodiment, at least one processor, individually and/or collectively, may be configured to cause the wearable device to, based on the first input, control the display to display a first virtual object corresponding to a counterpart of the call to a user wearing the wearable device.

According to an example embodiment, at least one processor, individually and/or collectively, may be configured to cause the wearable device to obtain a second input for moving the first virtual object to a designated position in a real world or virtual reality.

According to an example embodiment, at least one processor, individually and/or collectively, may be configured to cause the wearable device to perform the call with the counterpart based on the second input.

A wearable device according to an embodiment of the disclosure may comprise a display, memory, and at least one processor comprising processing circuitry.

According to an example embodiment, the memory may store instructions that may be executed by at least one processor, at least one processor, individually and/or collectively, may be configured to cause the wearable device to identify reception of a call request from a counterpart.

According to an example embodiment, at least one processor, individually and/or collectively, may be configured to cause the wearable device to, based on the identification of the reception of the call request, control the display to display a second virtual object corresponding to the counterpart to a user of the wearable device.

According to an example embodiment, at least one processor, individually and/or collectively, may be configured to cause the wearable device to obtain an input for moving the second virtual object to a first designated position in a real world or virtual reality.

According to an example embodiment, at least one processor, individually and/or collectively, may be configured to cause the wearable device to perform the call with the counterpart transmitting the call request based on obtaining the input.

According to an example embodiment, in a non-transitory computer-readable recording medium storing one or more programs, the one or more programs may comprise instructions that, when executed by at least one processor of a wearable electronic device, individually and/or collectively, cause the wearable electronic device to obtain a first input for sending a call.

According to an example embodiment, the one or more programs may comprise instructions that, when executed by at least one processor of the wearable electronic device, individually and/or collectively, cause the wearable electronic device to, based on the first input, control the display to display a first virtual object corresponding to a counterpart of the call to a user wearing the wearable device.

According to an example embodiment, the one or more programs may comprise instructions that, when executed by at least one processor of the wearable electronic device, individually and/or collectively, cause the wearable electronic device to obtain a second input for moving the first virtual object to a designated position in a real world or virtual reality.

According to an example embodiment, the one or more programs may comprise instructions that, when executed by at least one processor of the wearable electronic device, individually and/or collectively, cause the wearable electronic device to to perform the call with the counterpart based on the second input.

According to an example embodiment, the one or more programs may comprise instructions that, when executed by at least one processor of the wearable electronic device, individually and/or collectively, cause the wearable electronic device to identify reception of a call request from a counterpart.

According to an example embodiment, the one or more programs may comprise instructions that, when executed by at least one processor of the wearable electronic device, individually and/or collectively, cause the wearable electronic device to, based on the identification of the reception of the call request, control the display to display a second virtual object corresponding to the counterpart to a user of the wearable device.

According to an example embodiment, the one or more programs may comprise instructions that, when executed by at least one processor of the wearable electronic device, individually and/or collectively, cause the wearable electronic device to obtain an input for moving the second virtual object to a first designated position in a real world or virtual reality.

According to an example embodiment, the one or more programs may comprise instructions that, when executed by at least one processor of the wearable electronic device, individually and/or collectively, cause the wearable electronic device to perform the call with the counterpart transmitting the call request based on obtaining the input.

### [Brief Description of Drawings]

The above and other aspects, features and advantages of certain embodiments of the present disclosure will be more apparent from the following detailed description, taken in conjunction with the accompanying drawings, in which:
FIG. 1 is a block diagram illustrating an example electronic device in a network environment according to various embodiments;
FIG. 2A is a perspective view illustrating an example wearable device (e.g., an electronic device) according to various embodiments;
FIG. 2B is a perspective view illustrating an example internal configuration of a wearable device (e.g., an electronic device) according to various embodiments;
FIG. 2C is an exploded perspective view illustrating an example wearable device (e.g., an electronic device) according to various embodiments;
FIG. 3 is a diagram illustrating an example configuration of an eye tracking camera of a wearable device according to various embodiments;
FIG. 4 is a flowchart illustrating an example operation of a wearable device transmitting a call to a counterpart using a virtual object (e.g., an avatar) according to various embodiments;
FIGS. 5A, 5B, 5C and 5D are diagrams illustrating an example operation described in FIG. 4 from the perspective of a user interface according to various embodiments;
FIG. 6A is a flowchart illustrating an example operation of obtaining information about a virtual object from an external device (e.g., a call server) and displaying the virtual object corresponding to a counterpart when the information about the virtual object corresponding to the counterpart of a call is not stored in a wearable device according to various embodiments;
FIG. 6B is a flowchart illustrating an example operation of displaying a virtual object corresponding to a counterpart stored in a wearable device when information about the virtual object corresponding to the counterpart of a call is stored in the wearable device according to various embodiments;
FIG. 7 is a flowchart illustrating an example operation of performing a call by controlling a virtual object (e.g., an avatar) corresponding to a counterpart who has sent a call when a call reception event occurs while a user of a wearable device is using a wearable device according to various embodiments;
FIGS. 8A, 8B and 8C are diagrams illustrating the example operation described in FIG. 7 from the perspective of a user interface according to various embodiments;
FIG. 9 is a flowchart illustrating an example operation of performing a video call or a voice call according to a placement position of a virtual object according to various embodiments;
FIG. 10 is a diagram illustrating the operation described in FIG. 9 from the perspective of a user interface according to various embodiments;
FIG. 11 is a flowchart illustrating an example operation of performing a call after changing and displaying a shape of a virtual object when the virtual object is positioned close to another object around the virtual object, according to various embodiments;
FIGS. 12A, 12B and 12C are diagrams illustrating the operation described with reference to FIG. 11 from the perspective of a user interface according to various embodiments;
FIG. 13 is a flowchart illustrating an example operation of displaying a designated visual effect around a virtual object corresponding to a counterpart by a wearable device when the counterpart of the call is not wearing a wearable device according to various embodiments;
FIGS. 14A, 14B and 14C are diagrams illustrating the operation described with reference to FIG. 13 from the perspective of a user interface according to various embodiments;
FIG. 15 is a flowchart illustrating an example operation of transmitting call information to an external device so that call information is provided from the external device operably connected to a wearable device of a counterpart when a call occurrence event is identified while the counterpart is not wearing the wearable device according to various embodiments;
FIGS. 16A and 16B are diagrams illustrating the operation described in FIG. 15 from the perspective of a user interface according to various embodiments;
FIG. 17 is a signal flow diagram illustrating an example operation described with reference to FIG. 15 according to various embodiments;
FIG. 18 is a signal flow diagram illustrating an example operation performed when a wearable device is separated from a user while a call is being performed according to various embodiments;
FIGS. 19A and 19B are diagrams illustrating the operation described with reference to FIG. 18 from the perspective of a user interface according to various embodiments;
FIG. 20 is a flowchart illustrating an example operation of displaying another virtual object for rejecting call reception around a virtual object by a wearable device according to various embodiments;
FIGS. 21A and 21B are diagrams illustrating the operation described with reference to FIG. 20 from the perspective of a user interface according to various embodiments;
FIG. 22 is a signal flow diagram illustrating an example operation of terminating a call by controlling a virtual object according to various embodiments;
FIGS. 23A, 23B and 23C are diagrams illustrating the operation described with reference to FIG. 22 from the perspective of a user interface according to various embodiments;
FIGS. 24A, 24B and 24C are diagrams illustrating an operation of displaying avatars instead of a call application execution screen and sending a call by controlling any one of the displayed avatars according to various embodiments;
FIG. 25 is a signal flow diagram illustrating an example operation of transmitting and receiving a call according to various embodiments; and
FIGS. 26A and 26B are perspective views illustrating an example wearable device according to various embodiments.

### [Mode for the Invention]

Hereinafter, various example embodiments of the disclosure are described in greater detail with reference to the drawings. However, the disclosure may be implemented in other various forms and is not limited to the various example embodiments set forth herein. The same or similar reference denotations may be used to refer to the same or similar elements throughout the disclosure and the drawings. Further, for clarity and brevity, no description may be made of well-known functions and configurations in the drawings and relevant descriptions.

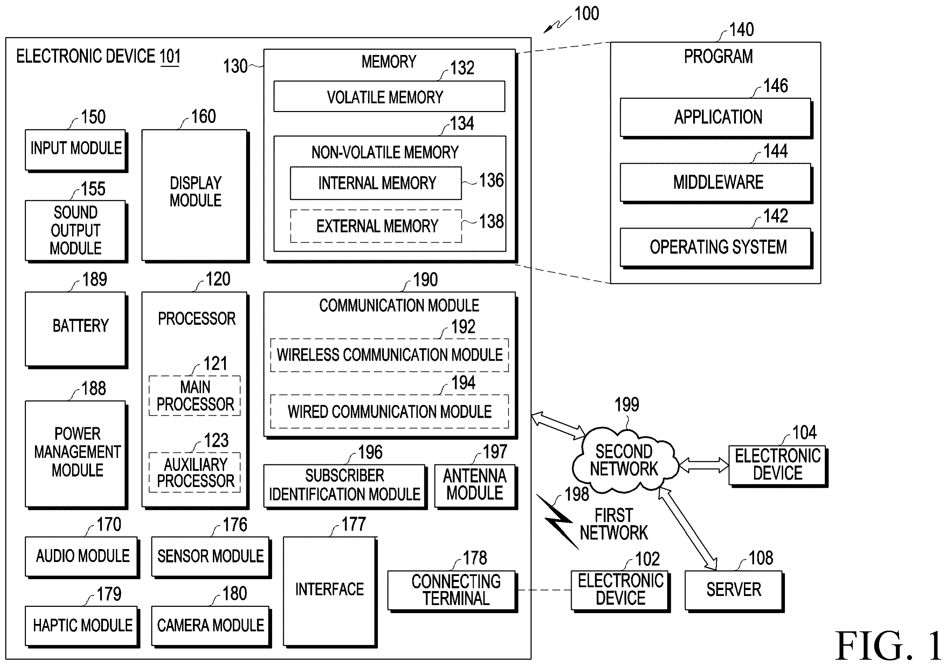

FIG. 1 is a block diagram illustrating an example electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions. The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

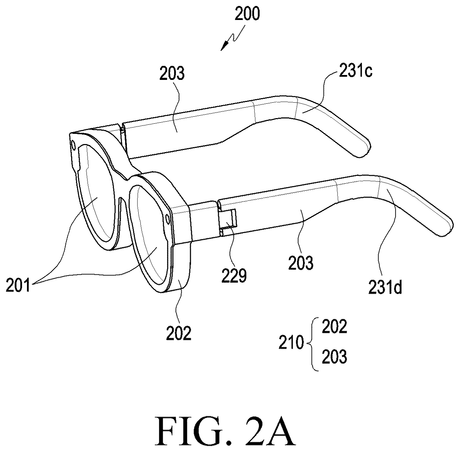

FIG. 2A is a perspective view illustrating an example wearable device 200 according to various embodiments.

Referring to FIG. 2A, the wearable device 200 may be a glasses-type electronic device, and the user may visually recognize her surrounding objects or environment while wearing the wearable device 200. For example, the wearable device 200 may be a head-mounted device (HMD) or smart glasses capable of providing images directly in front of the user's eyes. The configuration of the wearable device 200 of FIG. 2A may be identical in whole or part to the configuration of the electronic device 101 of FIG. 1.

According to various embodiments, the wearable device 200 may include a housing that forms the exterior of the wearable device 200. The housing 210 may provide a space in which components of the wearable device 200 may be disposed. For example, the housing 210 may include a lens frame 202 and at least one wearing member 203.

According to various embodiments, the wearable device 200 may include a display member 201 capable of providing the user with visual information. For example, the display member 201 may include a module equipped with a lens, a display, a waveguide, and/or a touch circuit. According to an embodiment, the display member 201 may be transparent or semi-transparent. According to an embodiment, the display member 201 may include a semi-transparent glass or a window member the light transmittance of which may be adjusted as the coloring concentration is adjusted. According to an embodiment, a pair of display members 201 may be provided and disposed to correspond to the user's left and right eyes, respectively, with the wearable device 200 worn on the user's body.

According to various embodiments, the lens frame 202 may receive at least a portion of the display member 201. For example, the lens frame 202 may surround at least a portion of the display member 201. According to an embodiment, the lens frame 202 may position at least one of the display members 201 to correspond to the user's eye. According to an embodiment, the lens frame 202 may be the rim of a normal eyeglass structure. According to an embodiment, the lens frame 202 may include at least one closed loop surrounding the display devices 201.

According to various embodiments, the wearing members 203 may extend from the lens frame 202. For example, the wearing members 203 may extend from ends of the lens frame 202 and, together with the lens frame 202, may be supported and/or positioned on a part (e.g., ears) of the user's body. According to an embodiment, the wearing members 203 may be rotatably coupled to the lens frame 202 through hinge structures 229. According to an embodiment, the wearing member 203 may include an inner side surface 231c configured to face the user's body and an outer side surface 231d opposite to the inner side surface.

According to various embodiments, the wearable device 200 may include the hinge structures 229 configured to fold the wearing members 203 on the lens frame 202. The hinge structure 229 may be disposed between the lens frame 202 and the wearing member 203. While the wearable device 200 is not worn, the user may fold the wearing members 203 on the lens frame 202 to carry or store the electronic device.

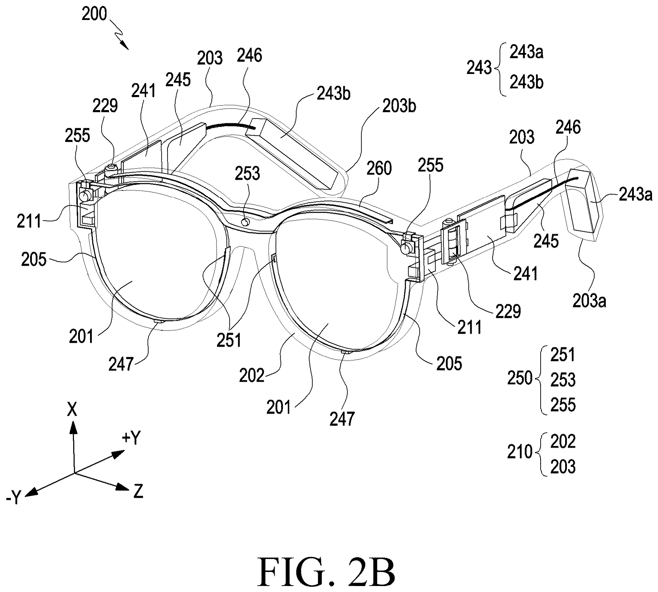

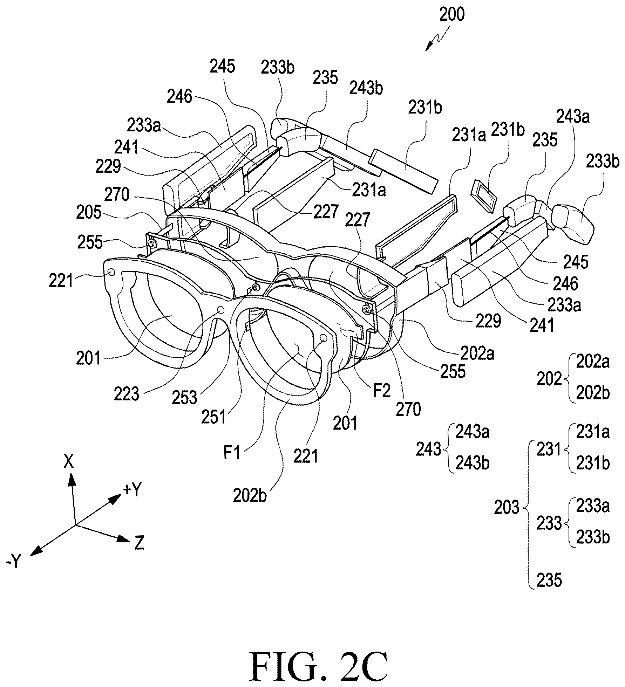

FIG. 2B is a perspective view illustrating an example configuration of a wearable device according to various embodiments. FIG. 2C is an exploded perspective view illustrating a wearable device according to various embodiments.

Referring to FIGS. 2B and 2C, a wearable device 200 may include components received in the housing 210 (e.g., at least one circuit board 241 (e.g., printed circuit board (PCB), printed board assembly (PBA), flexible PCB, or rigid-flexible PCB (RFPCB)), at least one battery 243, at least one speaker module 245, at least one power transfer structure 246, and/or a camera module 250). The configuration of the housing 210 of FIG. 2B may be identical in whole or part to the configuration of the display member 201, the lens frame 202, the wearing members 203, and the hinge structures 229 of FIG. 2A.

According to various embodiments, the wearable device 200 may obtain and/or recognize a visual image regarding an object or environment in the direction (e.g., -Y direction) in which the wearable device 200 faces or the direction in which the user gazes, using the camera module 250 (e.g., the camera module 180 of FIG. 1) and may receive information regarding the object or environment from an external electronic device (e.g., the electronic device 102 or 104 or the server 108 of FIG. 1) through a network (e.g., the first network 198 or second network 199 of FIG. 1). In an embodiment, the wearable device 200 may provide the received object- or environment-related information, in the form of an audio or visual form, to the user. The wearable device 200 may provide the received object- or environment-related information, in a visual form, to the user through the display members 201, using the display module (e.g., the display module 160 of FIG. 1). For example, the wearable device 200 may implement augmented reality (AR) by implementing the object- or environment-related information in a visual form and combining it with an actual image of the user's surrounding environment.

According to various embodiments, the display member 201 may include a first surface F1 facing in a direction (e.g., -y direction) in which external light is incident and a second surface F2 facing in a direction (e.g., +y direction) opposite to the first surface F1. With the user wearing the wearable device 200, at least a portion of the light or image coming through the first surface F1 may be incident on the user's left eye and/or right eye through the second surface F2 of the display member 201 disposed to face the user's left eye and/or right eye.

According to various embodiments, the lens frame 202 may include at least two or more frames. For example, the lens frame 202 may include a first frame 202a and a second frame 202b. According to an embodiment, when the user wears the wearable device 200, the first frame 202a may be a frame of the portion facing the user's face, and the second frame 202b may be a portion of the lens frame 202 spaced from the first frame 202a in the gazing direction (e.g., -Y direction) in which the user gazes.

According to various embodiments, the light output module 211 may provide an image and/or video to the user. For example, the light output module 211 may include a display panel (not shown) capable of outputting images and a lens (not shown) corresponding to the user's eye and guiding images to the display member 201. For example, the user may obtain the image output from the display panel of the light output module 211 through the lens of the light output module 211. According to various embodiments, the light output module 211 may include a device configured to display various information. For example, the light output module 211 may include at least one of a liquid crystal display (LCD), a digital mirror device (DMD), a liquid crystal on silicon (LCoS), or an organic light emitting diode (OLED), or a micro light emitting diode (micro LED). According to an embodiment, when the light output module 211 and/or the display member 201 includes one of an LCD, a DMD, or an LCoS, the wearable device 200 may include a light output module 211 and/or a light source emitting light to the display area of the display member 201. According to an embodiment, when the light output module 211 and/or the display member 201 may include OLEDs or micro LEDs, the wearable device 200 may provide virtual images to the user without a separate light source.

According to various embodiments, at least a portion of the light output module 211 may be disposed in the housing 210. For example, the light output module 211 may be disposed in the wearing member 203 or the lens frame 202 to correspond to each of the user's right eye and left eye. According to an embodiment, the light output module 211 may be connected to the display member 201 and may provide images to the user through the display member 201.

According to various embodiments, the circuit board 241 may include components for driving the wearable device 200. For example, the circuit board 241 may include at least one integrated circuit chip. Further, at least one of the processor 120, the memory 130, the power management module 188, or the communication module 190 of FIG. 1 may be provided in the integrated circuit chip. According to an embodiment, a circuit board 241 may be disposed in the wearing member 203 of the housing 210. According to an embodiment, the circuit board 241 may be electrically connected to the battery 243 through the power transfer structure 246. According to an embodiment, the circuit board 241 may be connected to the flexible printed circuit board 205 and may transfer electrical signals to the electronic components (e.g., the light output module 211, the camera module 250, and the light emitting unit) of the electronic device through the flexible printed circuit board 205. According to an embodiment, the circuit board 241 may be a circuit board including an interposer.

According to various embodiments, the flexible printed circuit board 205 may extend from the circuit board 241 through the hinge structure 229 to the inside of the lens frame 202 and may be disposed in at least a portion of the inside of the lens frame 202 around the display member 201.

According to various embodiments, the battery 243 (e.g., the battery 189 of FIG. 1) may be connected with components (e.g., the light output module 211, the circuit board 241, and the speaker module 245, the microphone module 247, and/or the camera module 250) of the wearable device 200 and may supply power to the components of the wearable device 200.

According to various embodiments, at least a portion of the battery 243 may be disposed in the wearing member 203. According to an embodiment, batteries 243 may be disposed in ends 203a and 203b of the wearing members 203. For example, the batteries 243 may include a first battery 243a disposed in a first end 203a of the wearing member 203 and a second battery 243b disposed in a second end 203b of the wearing member 203.

According to various embodiments, the speaker module 245 (e.g., the audio module 170 or the sound output module 155 of FIG. 1) may convert an electrical signal into sound. At least a portion of the speaker module 245 may be disposed in the wearing member 203 of the housing 210. According to an embodiment, the speaker module 245 may be located in the wearing member 203 to correspond to the user's ear. For example, the speaker module 245 may be disposed between the circuit board 241 and the battery 243.

According to various embodiments, the power transfer structure 246 may transfer the power from the battery 243 to an electronic component (e.g., the light output module 211) of the wearable device 200. For example, the power transfer structure 246 may be electrically connected to the battery 243 and/or the circuit board 241, and the circuit board 241 may transfer the power received through the power transfer structure 246 to the light output module 211. According to an embodiment, the power transfer structure 246 may be connected to the circuit board 241 through the speaker module 245. For example, when the wearable device 200 is viewed from a side (e.g., in the Z-axis direction), the power transfer structure 246 may at least partially overlap the speaker module 245.

According to various embodiments, the power transfer structure 246 may be a component capable of transferring power. For example, the power transfer structure 246 may include a flexible printed circuit board or wiring. For example, the wiring may include a plurality of cables (not shown). In various embodiments, various changes may be made to the shape of the power transfer structure 246 considering the number and/or type of the cables.

According to various embodiments, the microphone module 247 (e.g., the input module 150 and/or the audio module 170 of FIG. 1) may convert a sound into an electrical signal. According to an embodiment, the microphone module 247 may be disposed in at least a portion of the lens frame 202. For example, at least one microphone module 247 may be disposed on a lower end (e.g., in the -X-axis direction) and/or on an upper end (e.g., in the X-axis direction) of the wearable device 200. According to various embodiments, the wearable device 200 may more clearly recognize the user's voice using voice information (e.g., sound) obtained by the at least one microphone module 247. For example, the wearable device 200 may distinguish the voice information from the ambient noise based on the obtained voice information and/or additional information (e.g., low-frequency vibration of the user's skin and bones). For example, the wearable device 200 may clearly recognize the user's voice and may perform a function of reducing ambient noise (e.g., noise canceling). The microphone module 247 according to various embodiments of the disclosure may include a plurality of microphone modules 247 to perform beamforming. The microphone module 247 according to various embodiments of the disclosure may include a non-directional or directional microphone.

According to various embodiments, the camera module 250 may capture a still image and/or a video. The camera module 250 may include at least one of a lens, at least one image sensor, an image signal processor, or a flash. According to an embodiment, the camera module 250 may be disposed in the lens frame 202 and may be disposed around the display member 201.

According to various embodiments, the camera module 250 may include at least one first camera module 251. According to an embodiment, the first camera module 251 may capture the trajectory of the user's eye (e.g., a pupil) or gaze. For example, the first camera module 251 may capture the reflection pattern of the light emitted by the light emitting unit to the user's eyes. For example, the light emitting unit may emit light in an infrared band for tracking the trajectory of the gaze using the first camera module 251. For example, the light emitting unit may include an IR LED. According to an embodiment, the processor (e.g., the processor 120 of FIG. 1) may adjust the position of the virtual image so that the virtual image projected on the display member 201 corresponds to the direction in which the user's pupil gazes. According to an embodiment, the first camera module 251 may include a global shutter (GS)-type camera. It is possible to track the trajectory of the user's eyes or gaze using a plurality of third camera modules 251 having the same specifications and performance.

According to various embodiments, the first camera module 251 may periodically or aperiodically transmit information related to the trajectory of the user's eye or gaze (e.g., trajectory information) to the processor (e.g., the processor 120 of FIG. 1). According to an embodiment, when the first camera module 251 detects a change in the user's gaze based on the trajectory information (e.g., when the user's eyes move more than a reference value with the head positioned still), the first camera module 251 may transmit the trajectory information to the processor.

According to various embodiments, the camera modules 250 may include at least one second camera module 253. According to an embodiment, the second camera module 253 may capture an external image. According to an embodiment, the second camera module 253 may be a global shutter-type or rolling shutter (RS)-type camera. According to an embodiment, the second camera module 253 may capture an external image through the second optical hole 223 formed in the second frame 202b. For example, the second camera module 253 may include a high-resolution color camera, and it may be a high resolution (HR) or photo video (PV) camera. Further, the second camera module 253 may provide an auto-focus (AF) function and an optical image stabilizer (OIS) function.

According to various embodiments, the wearable device 200 may include a flash (not shown) positioned adjacent to the second camera module 253. For example, the flash (not shown) may provide light for increasing brightness (e.g., illuminance) around the wearable device 200 when an external image is obtained by the second camera module 253, thereby reducing difficulty in obtaining an image due to the dark environment, the mixing of various light beams, and/or the reflection of light.

According to various embodiments, the camera modules 250 may include at least one third camera module 255. According to an embodiment, the third camera module 255 may capture the user's motion through a first optical hole 221 formed in the lens frame 202. For example, the third camera module 255 may capture the user's gesture (e.g., hand gesture). Third camera modules 255 and/or first optical holes 221 may be disposed on two opposite sides of the lens frame 202 (e.g., the second frame 202b), e.g., formed in two opposite ends of the lens frame 202 (e.g., the second frame 202b) with respect to the X direction. According to an embodiment, the third camera module 255 may be a global shutter (GS)-type camera. For example, the third camera module 255 may be a camera supporting 3DoF (degrees of freedom) or 6DoF, which may provide position recognition and/or motion recognition in a 360-degree space (e.g., omnidirectionally). According to an embodiment, the third camera modules 255 may be stereo cameras and may perform the functions of simultaneous localization and mapping (SLAM) and user motion recognition using a plurality of global shutter-type cameras with the same specifications and performance. According to an embodiment, the third camera module 255 may include an infrared (IR) camera (e.g., a time of flight (TOF) camera or a structured light camera). For example, the IR camera may be operated as at least a portion of a sensor module (e.g., the sensor module 176 of FIG. 1) for detecting a distance from the subject.

According to an embodiment, at least one of the first camera module 251 to the third camera module 255 may be replaced with a sensor module (e.g., the sensor module 176 of FIG. 1) (e.g., lidar sensor). For example, the sensor module may include at least one of a vertical cavity surface emitting laser (VCSEL), an infrared sensor, and/or a photodiode. For example, the photodiode may include a positive intrinsic negative (PIN) photodiode or an avalanche photodiode (APD). The photodiode may be referred to as a photo detector or a photo sensor.

According to an embodiment, at least one of the first camera module 251, the second camera module 253, and the third camera module 255 may include a plurality of camera modules (not shown). For example, the second camera module 253 may include a plurality of lenses (e.g., wide-angle and telephoto lenses) and image sensors and may be disposed on one surface (e.g., a surface facing in the -Y axis) of the wearable device 200. For example, the wearable device 200 may include a plurality of camera modules having different properties (e.g., angle of view) or functions and control to change the angle of view of the camera module based on the user's selection and/or trajectory information. At least one of the plurality of camera modules may be a wide-angle camera and at least another of the plurality of camera modules may form a telephoto camera.

According to various embodiments, the processor (e.g., processor 120 of FIG. 1) may determine the motion of the wearable device 200 and/or the user's motion using information for the wearable device 200 obtained using at least one of a gesture sensor, a gyro sensor, or an acceleration sensor of the sensor module (e.g., the sensor module 176 of FIG. 1) and the user's action (e.g., approach of the user's body to the wearable device 200) obtained using the second camera module 253. According to an embodiment, in addition to the above-described sensor, the wearable device 200 may include a magnetic (geomagnetic) sensor capable of measuring an orientation using a magnetic field and magnetic force lines and/or a hall sensor capable of obtaining motion information (e.g., moving direction or distance) using the strength of a magnetic field. For example, the processor may determine the motion of the wearable device 200 and/or the user's motion based on information obtained from the magnetic (geomagnetic) sensor and/or the hall sensor.

According to various embodiments (not shown), the wearable device 200 may perform an input function (e.g., a touch and/or pressure sensing function) capable of interacting with the user. For example, a component configured to perform a touch and/or pressure sensing function (e.g., a touch sensor and/or a pressure sensor) may be disposed in at least a portion of the wearing member 203. The wearable device 200 may control the virtual image output through the display member 201 based on the information obtained through the components. For example, a sensor associated with a touch and/or pressure sensing function may be configured in various types, e.g., a resistive type, a capacitive type, an electro-magnetic (EM) type, or an optical type. According to an embodiment, the component configured to perform the touch and/or pressure sensing function may be identical in whole or part to the configuration of the input module 150 of FIG. 1.

According to various embodiments, the wearable device 200 may including a reinforcing member 260 that is disposed in an inner space of the lens frame 202 and formed to have a higher rigidity than that of the lens frame 202.

According to various embodiments, the wearable device 200 may include a lens structure 270. The lens structure 270 may refract at least a portion of light. For example, the lens structure 270 may be a prescription lens having refractive power. According to an embodiment, the lens structure 270 may be disposed behind (e.g., +Y direction) the second window member of the display member 201. For example, the lens structure 270 may be positioned between the display member 201 and the user's eye. For example, the lens structure 270 may face the display member.

According to various embodiments, the housing 210 may include a hinge cover 227 that may conceal a portion of the hinge structure 229. Another part of the hinge structure 229 may be received or hidden between an inner case 231 and an outer case 233, which are described below.

According to various embodiments, the wearing member 203 may include the inner case 231 and the outer case 233. The inner case 231 may be, e.g., a case configured to face the user's body or directly contact the user's body, and may be formed of a material having low thermal conductivity, e.g., a synthetic resin. According to an embodiment, the inner case 231 may include an inner side surface facing the user's body. The outer case 233 may include, e.g., a material (e.g., a metal) capable of at least partially transferring heat and may be coupled to the inner case 231 to face each other. According to an embodiment, the outer case 233 may include an outer side surface opposite to the inner side surface 331c. In an embodiment, at least one of the circuit board 241 or the speaker module 245 may be received in a space separated from the battery 243 in the wearing member 203. In the illustrated embodiment, the inner case 231 may include a first case 231a including the circuit board 241 or the speaker module 245 and a second case 231b receiving the battery 243, and the outer case 233 may include a third case 233a coupled to face the first case 231a and a fourth case 233b coupled to face the second case 231b. For example, the first case 231a and the third case 233a may be coupled (hereinafter, 'first case portions 231a and 233a') to receive the circuit board 241 and/or the speaker module 245, and the second case 231b and the fourth case 233b may be coupled (hereinafter, 'second case portions 231b and 233b') to receive the battery 343.

According to various embodiments, the first case portions 231a and 233a may be rotatably coupled to the lens frame 202 through the hinge structure 229, and the second case portions 231 b and 233b may be connected or mounted to the ends of the first case portions 231a and 233a through the connecting member 235. In various embodiments, a portion of the connecting member 235 in contact with the user's body may be formed of a material having low thermal conductivity, e.g., an elastic material, such as silicone, polyurethane, or rubber, and another portion thereof which does not come into contact with the user's body may be formed of a material having high thermal conductivity (e.g., a metal). For example, when heat is generated from the circuit board 241 or the battery 243, the connecting member 235 may block heat transfer to the portion in contact with the user's body while dissipating or discharging heat through the portion not in contact with the user's body. According to an embodiment, a portion of the connecting member 235 configured to come into contact with the user's body may be interpreted as a portion of the inner case 231, and a portion of the connecting member 235 that does not come into contact with the user's body may be interpreted as a portion of the outer case 233. According to an embodiment (not shown), the first case 231a and the second case 231b may be integrally configured without the connecting member 235, and the third case 233a and the fourth case 233b may be integrally configured without the connecting member 235. According to various embodiments, other components (e.g., the antenna module 197 of FIG. 1) may be further included in addition to the illustrated components, and information regarding an object or environment may be received from an external electronic device (e.g., the electronic device 102 or 104 or server 108 of FIG. 1) through a network (e.g., the first network 198 or second network 199 of FIG. 1) using the communication module 190.

Although only the wearable device 200 is illustrated and described in FIGS. 2A, 2B and 2C (which may be referred to as FIGS. 2A to 2C), the disclosure is not limited thereto, and some components of the wearable device 200 illustrated in FIGS. 2A to 2C may be included in electronic devices, such as smartphones and tablet PCs.

The wearable device 200 according to various embodiments of the disclosure may identify whether the user 210 is wearing the wearable device 100 through a proximity sensor included in the wearable device 200. Alternatively the wearable device 200 according to various embodiments of the disclosure may determine whether the wearable device 200 is worn on the user 210 according to whether the frame of the wearable device 200 is unfolded (e.g., the unfolded state) and whether the approach of the user 210 is detected while the frame of the wearable device 200 is unfolded, through the angle sensor provided on the hinge portion of the wearable device 200.

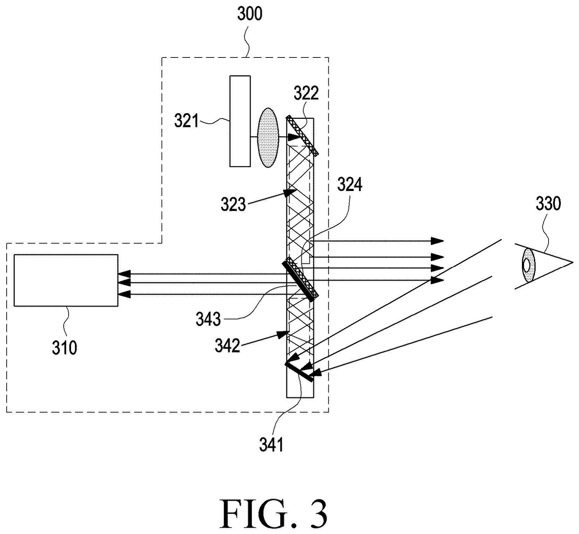

FIG. 3 is a diagram illustrating an example configuration of an eye tracking camera of a wearable device according to various embodiments. Referring to FIG. 3, a wearable device 300 (e.g., a glasses-type device) may include an eye tracking (ET) camera 310, a display 321, an input optical member 322, a first waveguide 323, an output optical member 324, a first splitter 341, a second waveguide 342, and a second splitter 343.

According to various embodiments, the pupil 330 of the user may be captured by the ET camera 310 through the first splitter 341 (e.g., a splitter for eye tracking), the second waveguide 342, and the second splitter 343. The ET camera 310 may track the user's gaze by detecting the pupil 330 from the captured image and identifying the movement of the detected pupil 330.

According to various embodiments, the image output through the display 321 may be reflected through the input optical member 322 and the first waveguide 323 and displayed through the output optical member 324. The wearable device 300 may track the user's gaze by identifying the movement of the user's pupil 330 while outputting the image through the display 321.

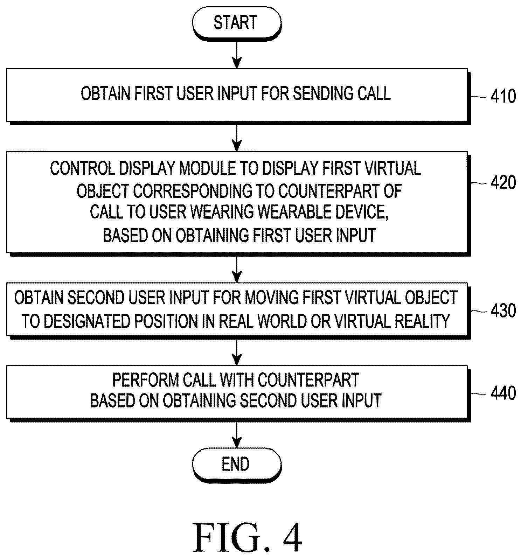

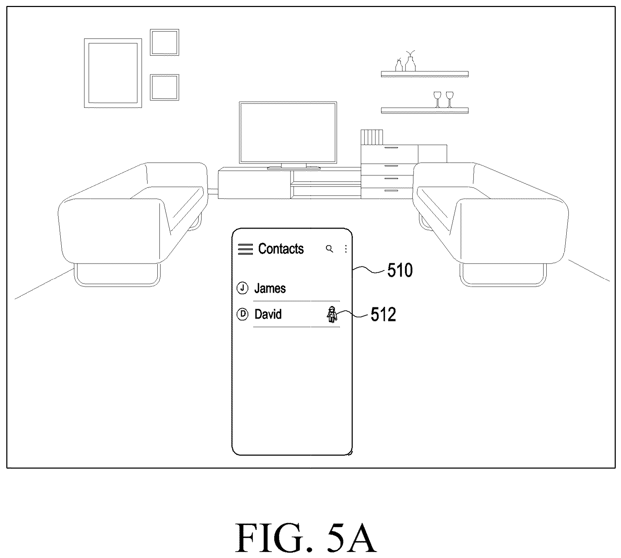

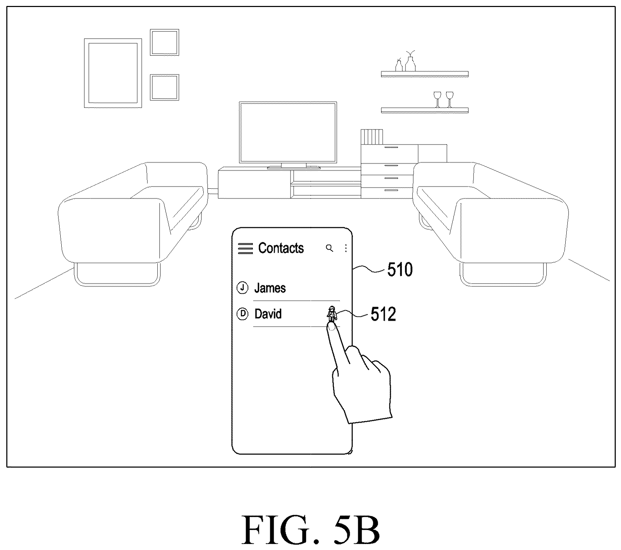

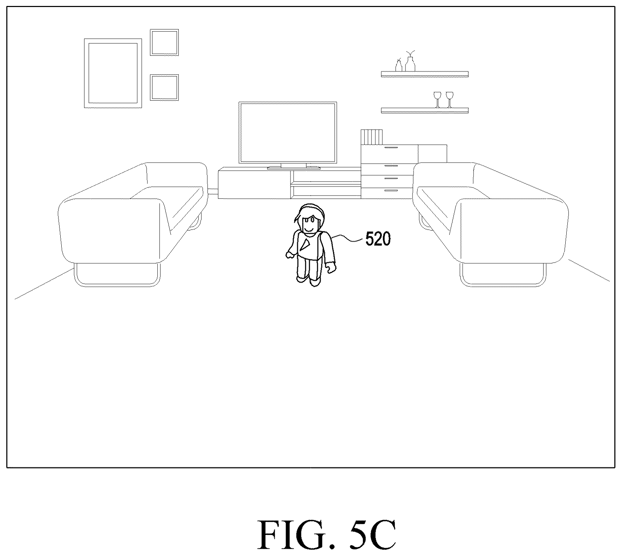

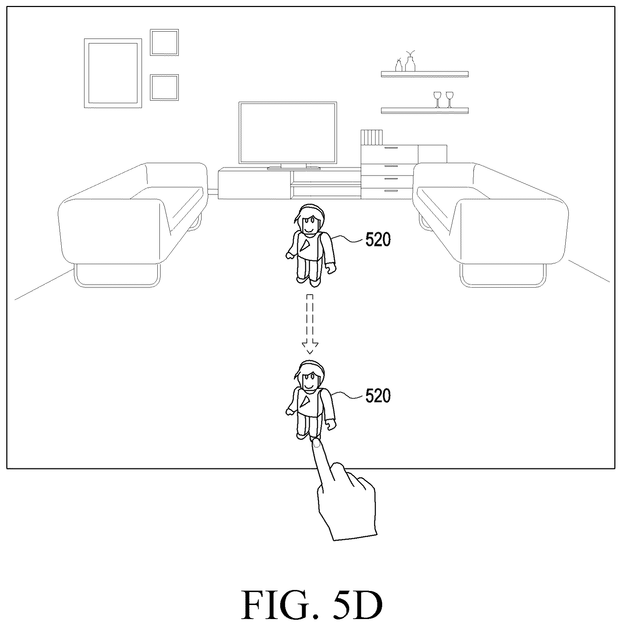

FIG. 4 is a flowchart illustrating an example operation of a wearable device 200 transmitting a call to a counterpart using a virtual object (e.g., the first avatar 520) according to various embodiments. FIGS. 5A, 5B, 5C and 5D are diagrams illustrating the operation described in FIG. 4 from the perspective of a user interface according to various embodiments.

In the following, each operation may be performed sequentially, but is not necessarily performed sequentially. For example, the order of the operations may be changed, and at least two operations may be performed in parallel.

According to an embodiment, it may be understood that operations 410 to 440 are performed by at least one processor individually and/or collectively (e.g., the processor 120 of FIG. 1) of a wearable device (e.g., the wearable device 200 of FIGS. 2A to 2C).

Referring to FIGS. 4 and 5A, 5B, 5C and 5D (which may be referred to as 5A to 5D), in operation 410, the wearable device 200 according to an embodiment of the disclosure may obtain a first input (e.g., first user input) for sending a call. As illustrated in FIG. 5A, the wearable device 200 according to an embodiment of the disclosure may obtain a virtual touch input to the avatar icon 512 corresponding to the counterpart for a video call. The avatar icon 512 according to an embodiment of the disclosure may be displayed when avatar information about a designated counterpart (e.g., David) is stored in the wearable device 200 or avatar information is obtained from an external device (e.g., a call server) operably connected to the wearable device 200. According to an embodiment of the disclosure, when a virtual touch input to a portion other than the avatar icon 512 is obtained from the user, the wearable device 200 according to an embodiment of the disclosure may process the virtual touch input of the user as an input for a general voice call rather than an input for performing a video call. The avatar icon 512 according to an embodiment of the disclosure may be included and displayed on the execution screen 510 of a designated application (e.g., a call application).

According to an embodiment, even if it is not a virtual touch input to the avatar icon 512, the wearable device 200 may obtain an input of selecting (or pinching) and then dragging counterpart information for a video call. For example, the wearable device 200 may display the virtual object (e.g., the first avatar 520) in the real world or virtual reality at a position where the input of selecting (or pinching) counterpart information for a video call and then dragging the counterpart information is released.

In operation 420, the wearable device 200 according to an embodiment of the disclosure may control the display module (e.g., the display module 160 of FIG. 1) so that the first virtual object (e.g., avatar) corresponding to the counterpart of the call is shown to the user wearing the wearable device 200, based on obtaining the first user input. When the avatar icon 512 is selected, as illustrated in FIG. 5C, the wearable device 200 according to an embodiment of the disclosure may display a virtual object (e.g., the first avatar 520) in the real world or virtual reality without displaying an execution screen 510 of a designated application (e.g., a call application). However, according to an embodiment of the disclosure, the virtual object (e.g., the first avatar 520) may be displayed together with the execution screen 510 of a designated application (e.g., a call application).

In operation 430, the wearable device 200 according to an embodiment of the disclosure may obtain a second input (e.g., second user input) for moving the first virtual object (e.g., the first avatar 520) to a designated position in the real world or virtual reality. As illustrated in FIG. 5D, the wearable device 200 according to an embodiment of the disclosure may obtain a second user input (e.g., a virtual drag gesture) for moving the first virtual object (e.g., the first avatar 520) to the designated position in the real world or virtual reality.

In operation 440, the wearable device 200 according to an embodiment of the disclosure may perform a call with the counterpart, based on the second user input. When the user input for moving the first avatar 520 is obtained, the wearable device 200 according to an embodiment of the disclosure may send a call to the counterpart corresponding to the first avatar 520.

According to an embodiment, the wearable device 200 may perform a call with the counterpart based on releasing the input of selecting (or pinching) and then dragging counterpart information for a video call at the designated position in the real world or virtual reality.

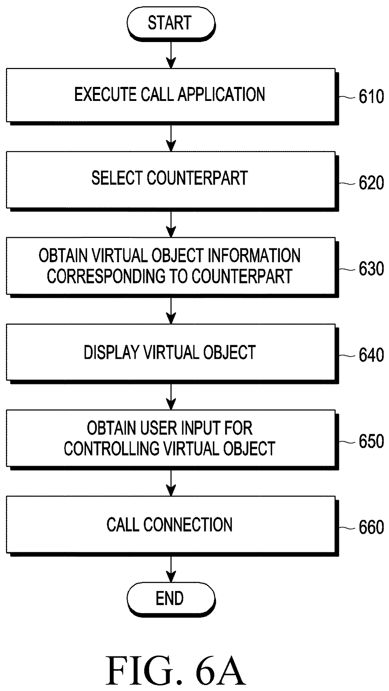

FIG. 6A is a flowchart illustrating an example operation of obtaining information about a virtual object (e.g., the first avatar 520) from an external device (e.g., a call server) and displaying the virtual object corresponding to a counterpart when the information about the virtual object corresponding to the counterpart of a call is not stored in a wearable device 200 according to various embodiments.

In the following, each operation may be performed sequentially, but is not necessarily performed sequentially. For example, the order of the operations may be changed, and at least two operations may be performed in parallel.

According to an embodiment, it may be understood that operations 610 to 660 are performed by at least one processor individually and/or collectively (e.g., the processor 120 of FIG. 1) of a wearable device (e.g., the wearable device 200 of FIGS. 2A to 2C).

Referring to FIG. 6A, in operation 610, the wearable device 200 according to an embodiment of the disclosure may execute a call application. In operation 620, the wearable device 200 according to an embodiment of the disclosure may obtain an input (e.g., a user input) for selecting a counterpart. For example, the wearable device 200 according to an embodiment of the disclosure may obtain a virtual touch input to the avatar icon 512. In operation 630, the wearable device 200 according to an embodiment of the disclosure may obtain virtual object information corresponding to the counterpart. The wearable device 200 according to an embodiment of the disclosure may obtain information about the first avatar 520 corresponding to the selected counterpart from an external device (e.g., a call server) operably connected to the wearable device 200. In operation 640, the wearable device 200 according to an embodiment of the disclosure may display a virtual object (e.g., the first avatar 520). In operation 650, the wearable device 200 according to an embodiment of the disclosure may obtain a user input for controlling the virtual object (e.g., the first avatar 520). As illustrated in FIG. 5D, the wearable device 200 according to an embodiment of the disclosure may obtain a second user input (e.g., a virtual drag gesture) for moving the first virtual object (e.g., the first avatar 520) to the designated position in the real world or virtual reality. The wearable device 200 according to an embodiment of the disclosure may connect a call in operation 660. When the user input for moving the first avatar 520 is obtained, the wearable device 200 according to an embodiment of the disclosure may send a call to the counterpart corresponding to the first avatar 520.

According to an embodiment, the wearable device 200 may perform a call with the counterpart based on releasing the input of selecting (or pinching) and then dragging counterpart information for a video call at the designated position in the real world or virtual reality.

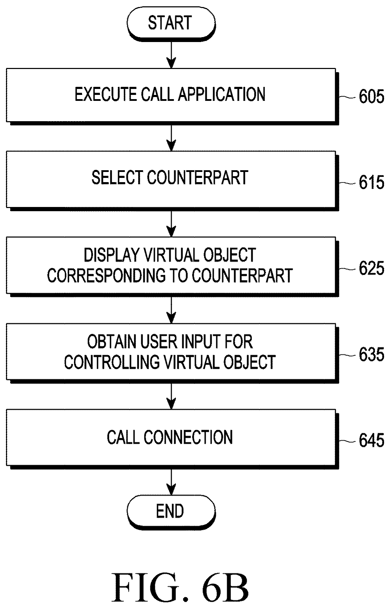

FIG. 6B is a flowchart illustrating an example operation of displaying a virtual object corresponding to a counterpart stored in a wearable device 200 when information about the virtual object corresponding to the counterpart of a call is stored in the wearable device according to various embodiments.

In the following, each operation may be performed sequentially, but is not necessarily performed sequentially. For example, the order of the operations may be changed, and at least two operations may be performed in parallel.

According to an embodiment, it may be understood that operations 605 to 645 are performed by at least one processor individually and/or collectively (e.g., the processor 120 of FIG. 1) of a wearable device (e.g., the wearable device 200 of FIGS. 2A to 2C).

Referring to FIG. 6B, in operation 605, the wearable device 200 according to an embodiment of the disclosure may execute a call application. In operation 615, the wearable device 200 according to an embodiment of the disclosure may obtain a user input for selecting a counterpart. For example, the wearable device 200 according to an embodiment of the disclosure may obtain a virtual touch input to the avatar icon 512. In operation 625, the wearable device 200 according to an embodiment of the disclosure may display a virtual object (e.g., the first avatar 520) corresponding to the counterpart. According to an embodiment of the disclosure, information about the virtual object (e.g., the first avatar 520) corresponding to the counterpart may be stored in the wearable device 200. In operation 635, the wearable device 200 according to an embodiment of the disclosure may obtain a user input for controlling the virtual object (e.g., the first avatar 520). As illustrated in FIG. 5D, the wearable device 200 according to an embodiment of the disclosure may obtain a second user input (e.g., a virtual drag gesture) for moving the first virtual object (e.g., the first avatar 520) to the designated position in the real world or virtual reality. The wearable device 200 according to an embodiment of the disclosure may connect a call in operation 645. When the user input for moving the first avatar 520 is obtained, the wearable device 200 according to an embodiment of the disclosure may send a call to the counterpart corresponding to the first avatar 520.

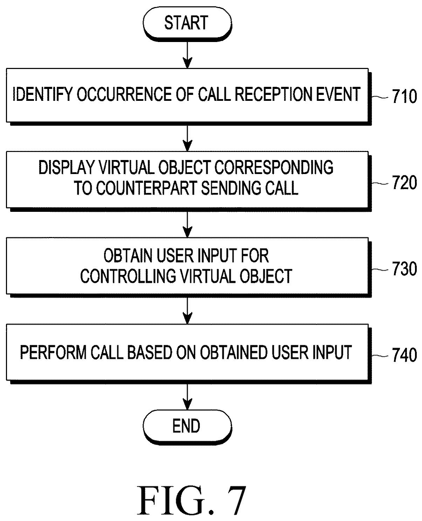

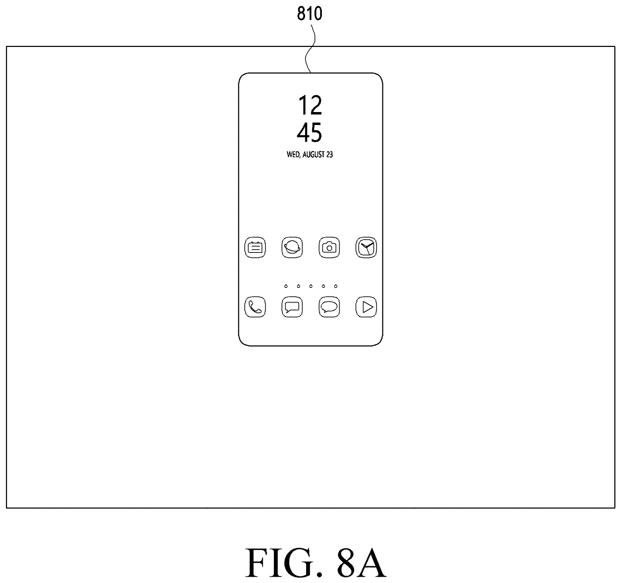

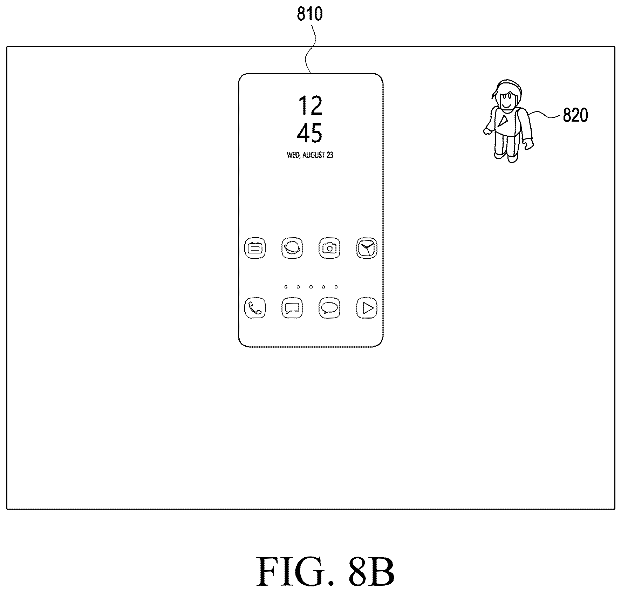

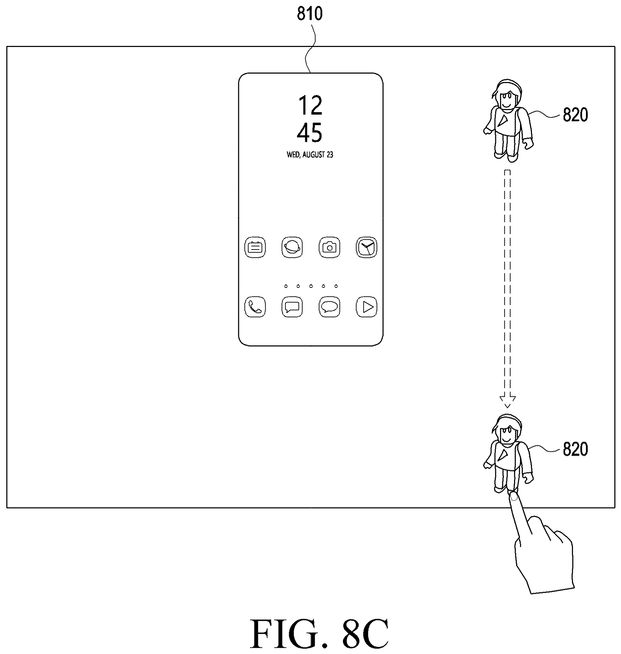

FIG. 7 is a flowchart illustrating an example operation of performing a call by controlling a virtual object (e.g., the second avatar 820) corresponding to a counterpart who has sent a call when a call reception event occurs while a user of a wearable device 200 is using a wearable device according to various embodiments. FIGS. 8A, 8B and 8C are diagrams illustrating the operation described in FIG. 7 from the perspective of a user interface according to various embodiments.

In the following, each operation may be performed sequentially, but is not necessarily performed sequentially. For example, the order of the operations may be changed, and at least two operations may be performed in parallel.

According to an embodiment, it may be understood that operations 710 to 740 are performed by at least one processor individually and/or collectively (e.g., the processor 120 of FIG. 1) of a wearable device (e.g., the wearable device 200 of FIGS. 2A to 2C).

Referring to FIG. 7, in operation 710, the wearable device 200 according to an embodiment of the disclosure may identify the occurrence of a call reception event. As illustrated in FIG. 8A, the wearable device 200 according to an embodiment of the disclosure may identify the occurrence of a call reception event while providing an augmented reality service to the user (e.g., while displaying the virtual home screen 810 in the real world). According to an embodiment, even in a state in which an augmented reality service is provided without displaying the virtual home screen 810, the wearable device 200 may identify the occurrence of a call reception event. For example, when the wearable device 200 is capable of receiving a call or has a function such as pulling a call, the wearable device 200 may identify the occurrence of a call reception event even when the virtual home screen 810 is not displayed.

In operation 720, the wearable device 200 according to an embodiment of the disclosure may display a virtual object corresponding to the counterpart who has sent the call. As illustrated in FIG. 8B, the wearable device 200 according to an embodiment of the disclosure may display the virtual object (e.g., the second avatar 820) corresponding to the counterpart who has sent the call. According to an embodiment of the disclosure, the virtual object (e.g., the second avatar 820) corresponding to the counterpart who has sent the call before being disposed at a position designated by the user may be moved and displayed according to the user's gaze (e.g., "body-locked"). According to an embodiment, moving according to the user's gaze (e.g., body lock) may refer, for example, to being fixed at a designated position in the user's field of view (FOV) or being positioned in the user's field of view (FOV). According to an embodiment of the disclosure, the information about the virtual object (e.g., the second avatar 820) corresponding to the counterpart who has sent the call may be obtained from the call server or may be stored in the wearable device 200 of the call recipient.

In operation 730, the wearable device 200 according to an embodiment of the disclosure may obtain a user input for controlling the virtual object. As illustrated in FIG. 8C, the wearable device 200 according to an embodiment of the disclosure may obtain a user input (e.g., a virtual drag gesture) for moving the second virtual object (e.g., the second avatar 820) to a designated position in the real world or virtual reality. The wearable device 200 according to an embodiment of the disclosure may perform a call based on the obtained user input in operation 740. The wearable device 200 according to an embodiment of the disclosure may perform a video call or a voice call with the counterpart who has sent the call according to the user input in operation 740. According to an embodiment of the disclosure, after being disposed at the position designated by the user, the virtual object (e.g., the second avatar 820) corresponding to the counterpart who has sent the call may be fixedly displayed in the real world or virtual reality regardless of the user's gaze (e.g., "world-locked").

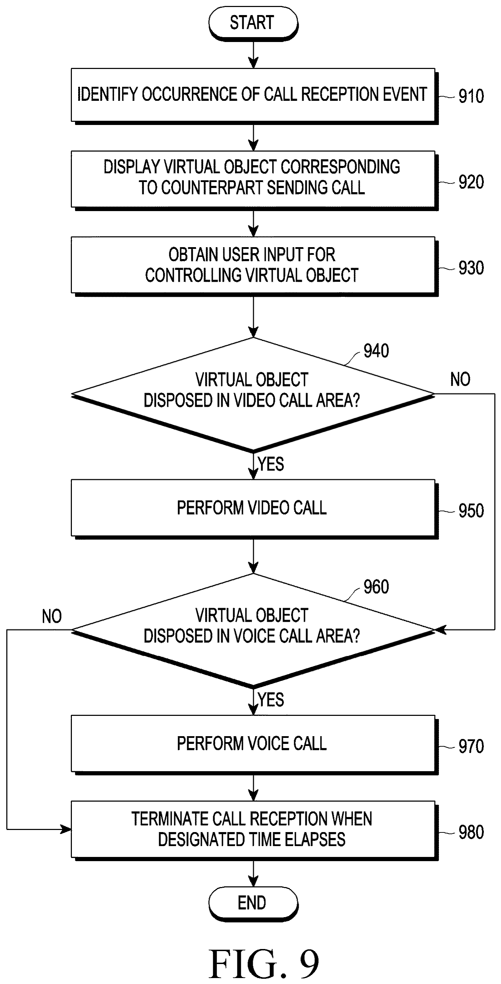

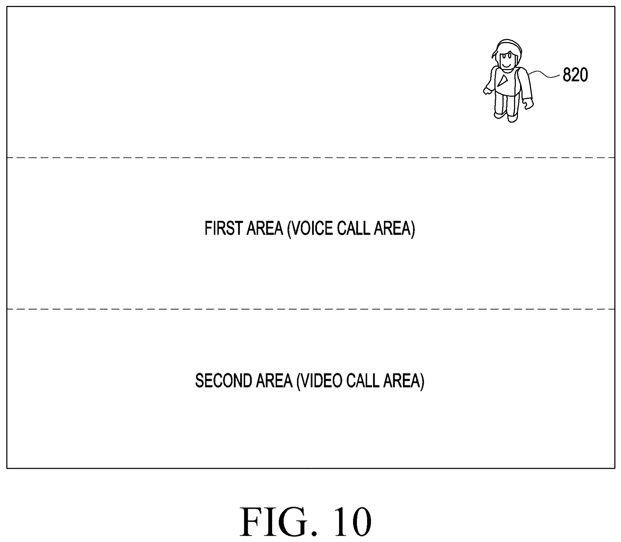

FIG. 9 is a flowchart illustrating an example operation of performing a video call or a voice call according to a placement position of a virtual object (e.g., the second avatar 820) according to various embodiments. FIG. 10 is a diagram illustrating the operation described in FIG. 9 from the perspective of a user interface according to various embodiments.

In the following, each operation may be performed sequentially, but is not necessarily performed sequentially. For example, the order of the operations may be changed, and at least two operations may be performed in parallel.

According to an embodiment, it may be understood that operations 910 to 980 are performed by at least one processor individually and/or collectively (e.g., the processor 120 of FIG. 1) of a wearable device (e.g., the wearable device 200 of FIGS. 2A to 2C).

Referring to FIG. 9, in operation 910, the wearable device 200 according to an embodiment of the disclosure may identify the occurrence of a call reception event. The wearable device 200 according to an embodiment of the disclosure may identify the occurrence of a call reception event while providing an augmented reality service to the user (e.g., while displaying the virtual home screen 810 in the real world).

In operation 920, the wearable device 200 according to an embodiment of the disclosure may display a virtual object corresponding to the counterpart who has sent the call. The wearable device 200 according to an embodiment of the disclosure may display a virtual object (e.g., the second avatar 820) corresponding to the counterpart who has sent the call. According to an embodiment, the virtual object may be body-locked and moved. "Body-locked and moved" may refer, for example, to being fixed at a designated position in the field of view (FOV) of the user or being positioned in the field of view of the user. According to an embodiment of the disclosure, the information about the virtual object (e.g., the second avatar 820) corresponding to the counterpart who has sent the call may be obtained from the call server or may be stored in the wearable device 200 of the call recipient.

In operation 930, the wearable device 200 according to an embodiment of the disclosure may obtain a user input for controlling the virtual object. The wearable device 200 according to an embodiment of the disclosure may obtain a user input (e.g., a virtual drag gesture) for moving the second virtual object (e.g., the second avatar 820) to the designated position in the real world or virtual reality.

In operation 940, the wearable device 200 according to an embodiment of the disclosure may determine whether the second avatar 820 is disposed in a video call area. Referring to FIG. 10, the wearable device 200 according to an embodiment of the disclosure may know a spatial coordinate value for the user's viewing angle in the real world or in virtual reality, and may determine whether the second avatar 820 is disposed in the video call area based on the coordinate value.

In operation 950, when it is determined that the second avatar 820 is disposed in the video call area, the wearable device 200 according to an embodiment of the disclosure may perform a video call with the counterpart. In operation 960, when it is determined that the second avatar 820 is not disposed in the video call area, the wearable device 200 according to an embodiment of the disclosure may determine whether the virtual object (e.g., the second avatar 820) is disposed in the voice call area. In operation 970, when it is determined that the second avatar 820 is disposed in the voice call area, the wearable device 200 according to an embodiment of the disclosure may perform a voice call with the counterpart. In operation 980, when it is determined that the virtual object (e.g., the second avatar 820) is not disposed in either the video call area or the voice call area, the wearable device 200 according to an embodiment of the disclosure may terminate call reception when a designated time elapses. For example, when the designated time elapses, the wearable device 200 according to an embodiment of the disclosure may no longer display the avatar (e.g., the second avatar 820) corresponding to the user who has sent the call.

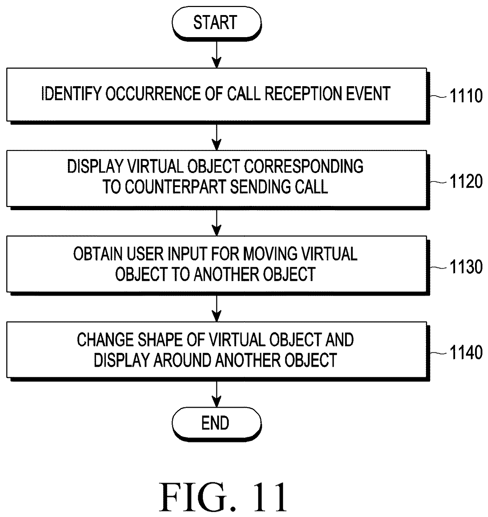

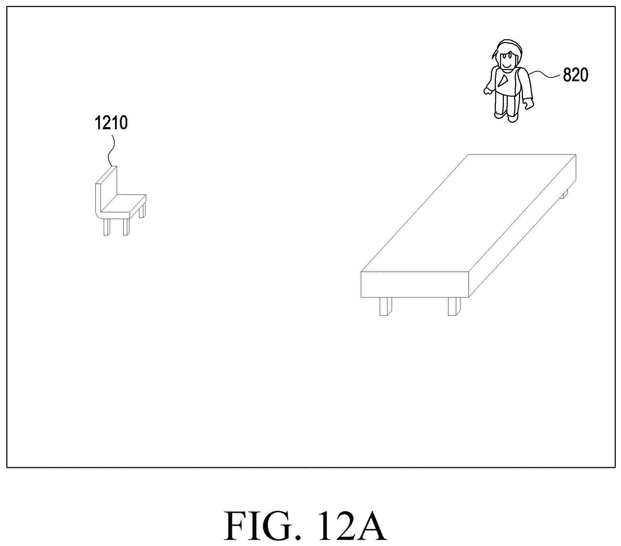

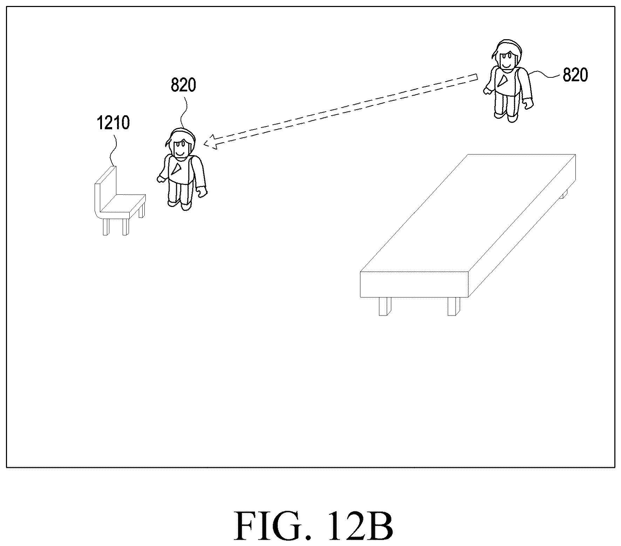

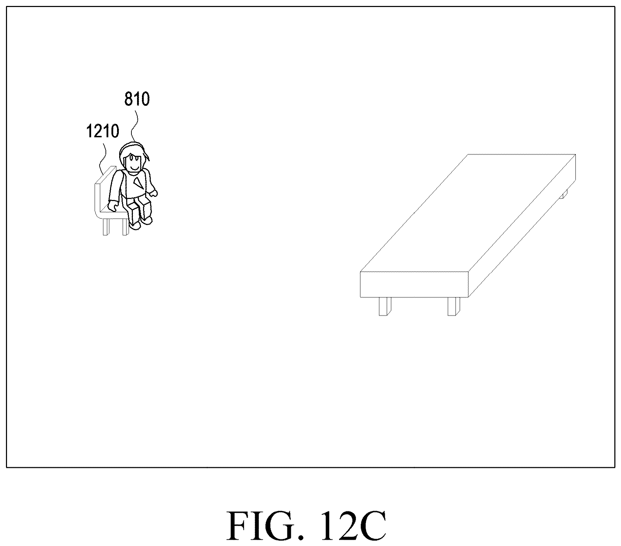

FIG. 11 is a flowchart illustrating an example operation of performing a call after changing and displaying a shape of a virtual object (e.g., the second avatar 820) when the virtual object (e.g., the second avatar 820) is positioned close to another object (e.g., the first real object 1210) around the virtual object, according to various embodiments. FIGS. 12A,12B and 12C are diagrams illustrating the operation described with reference to FIG. 11 from the perspective of a user interface according to various embodiments.

In the following, each operation may be performed sequentially, but is not necessarily performed sequentially. For example, the order of the operations may be changed, and at least two operations may be performed in parallel.

According to an embodiment, it may be understood that operations 1110 to 1140 are performed by at least one processor individually and/or collectively (e.g., the processor 120 of FIG. 1) of a wearable device (e.g., the wearable device 200 of FIGS. 2A to 2C).

Referring to FIGS. 11 and 12A, 12B and 12C (which may be referred to as 12A to 12C), the wearable device 200 according to an embodiment of the disclosure may identify the occurrence of a call reception event in operation 1110. The wearable device 200 according to an embodiment of the disclosure may identify the occurrence of a call reception event while providing an augmented reality service to the user (e.g., while displaying the virtual home screen 810 in the real world).

In operation 1120, the wearable device 200 according to an embodiment of the disclosure may display a virtual object corresponding to the counterpart who has sent the call. The wearable device 200 according to an embodiment of the disclosure may display a virtual object (e.g., the second avatar 820) corresponding to the counterpart who has sent the call. According to an embodiment of the disclosure, the information about the virtual object (e.g., the second avatar 820) corresponding to the counterpart who has sent the call may be obtained from the call server or may be stored in the wearable device 200 of the call recipient.

In operation 1130, the wearable device 200 according to an embodiment of the disclosure may obtain a user input for moving the virtual object to another object (e.g., the first real object 1210). The wearable device 200 according to an embodiment of the disclosure may obtain, e.g., a user input for moving the virtual object (e.g., the second avatar 820) around a real object or virtual object including a flat surface . The wearable device 200 according to an embodiment of the disclosure may apply a visual effect to the real object or virtual object including the flat surface and display the same. The wearable device 200 according to an embodiment of the disclosure may display call type information around the real object or virtual object including the flat surface. For example, when the virtual object is moved around a chair as the real object, the wearable device 200 according to an embodiment of the disclosure may display information indicating that a video call may be performed, as the virtual object.

In operation 1140, the wearable device 200 according to an embodiment of the disclosure may change the shape of the virtual object and display the same around another object. As illustrated in FIG. 12C, when the second avatar 820 is moved around the chair, the wearable device according to an embodiment of the disclosure may change the shape of the avatar to a shape of sitting on the chair. Further, the wearable device 200 according to an embodiment of the disclosure may display only a portion of the avatar (e.g., display only the upper body of the avatar). The wearable device 200 according to an embodiment of the disclosure may perform a video call (e.g., display a screen for a video call) after changing the shape of the avatar.

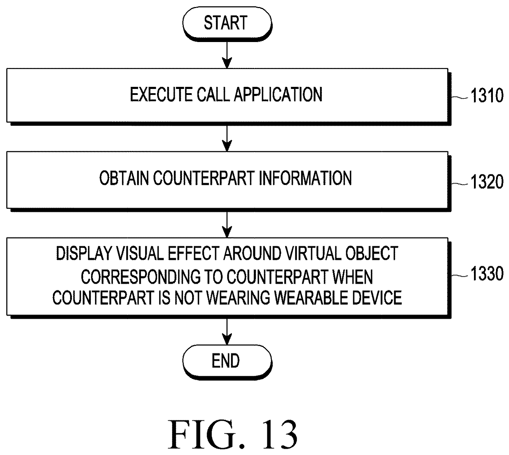

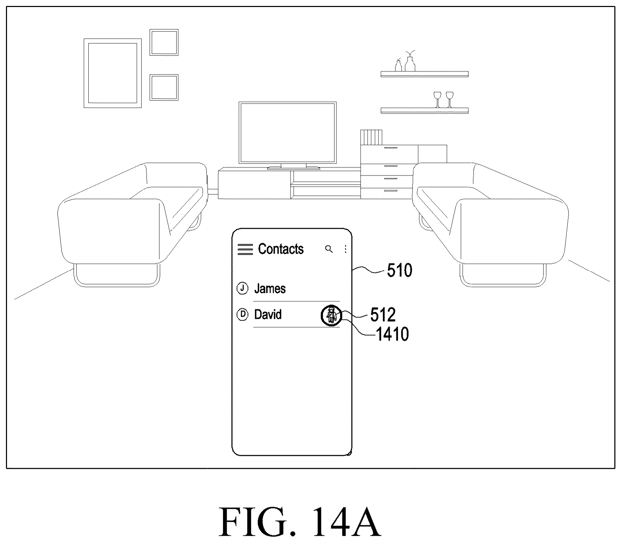

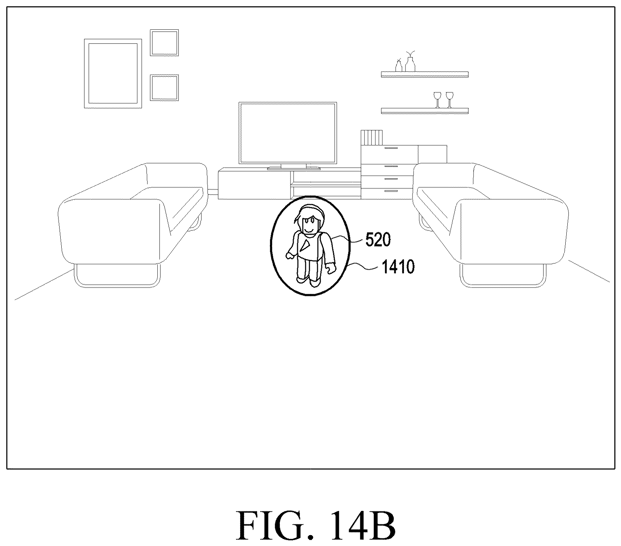

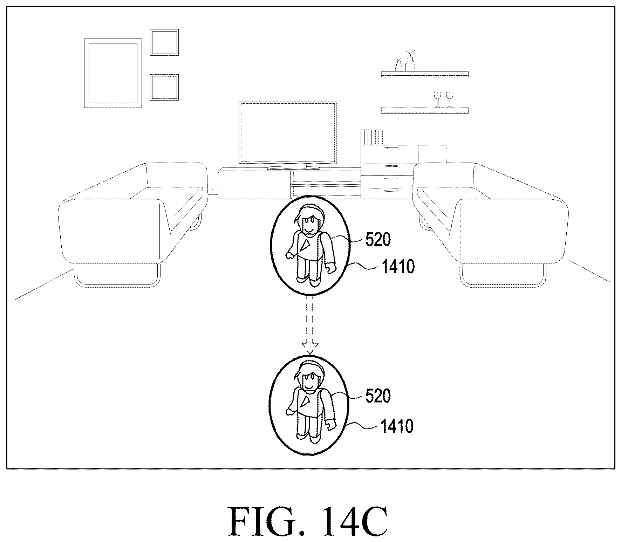

FIG. 13 is a flowchart illustrating an example operation of displaying a designated visual effect (e.g., the first visual effect 1410) around a virtual object corresponding to a counterpart by a wearable device 200 when the counterpart of the call is not wearing the wearable device 200 according to various embodiments. FIGS. 14A, 14B and 14C are diagrams illustrating the operation described with reference to FIG. 13 from the perspective of a user interface according to various embodiments.

In the following, each operation may be performed sequentially, but is not necessarily performed sequentially. For example, the order of the operations may be changed, and at least two operations may be performed in parallel.

According to an embodiment, it may be understood that operations 1310 to 1330 are performed by at least one processor individually and/or collectively (e.g., the processor 120 of FIG. 1) of a wearable device (e.g., the wearable device 200 of FIGS. 2A to 2C).

Referring to FIGS. 13 and 14A, 14B and 14C (which may be referred to as 14A to 14C), the wearable device 200 according to an embodiment of the disclosure may execute a call application in operation 1310. In operation 1320, the wearable device according to an embodiment of the disclosure may obtain information about the counterpart (e.g., information about whether the wearable device is worn) from an external device (e.g., a call server) based on execution of the call application. In operation 1330, when the counterpart is not wearing the wearable device 200, the wearable device 200 according to an embodiment of the disclosure may display a designated visual effect 1410 around the virtual object (e.g., the first avatar 520) corresponding to the counterpart. The designated visual effect 1410 according to an embodiment of the disclosure may be displayed around the avatar icon 512 and/or the first avatar 520, as illustrated in FIGS. 14A to 14C.

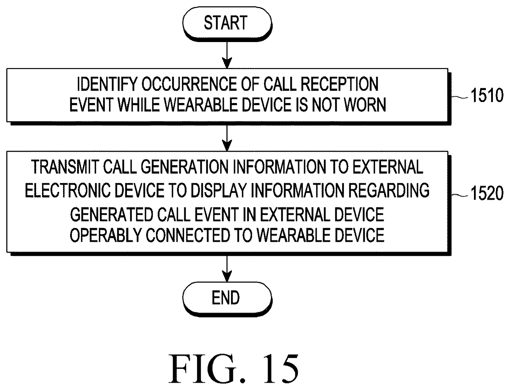

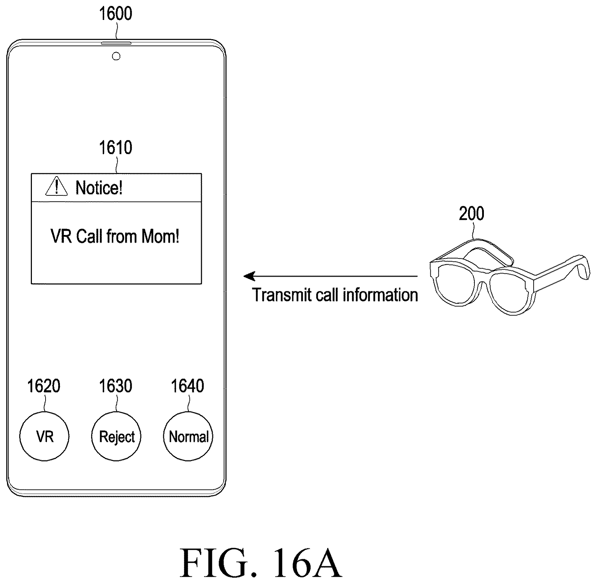

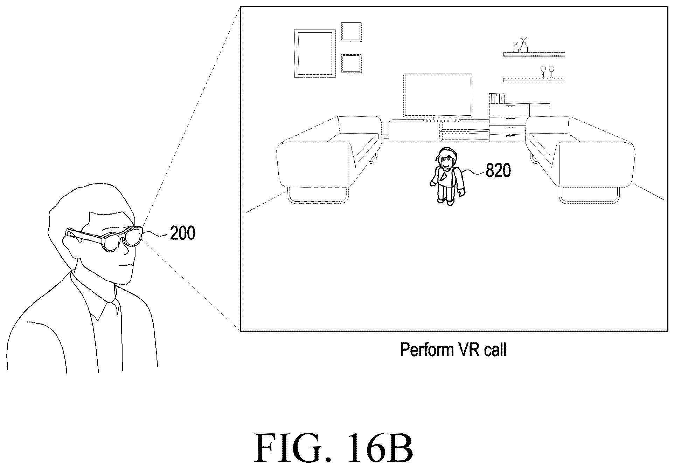

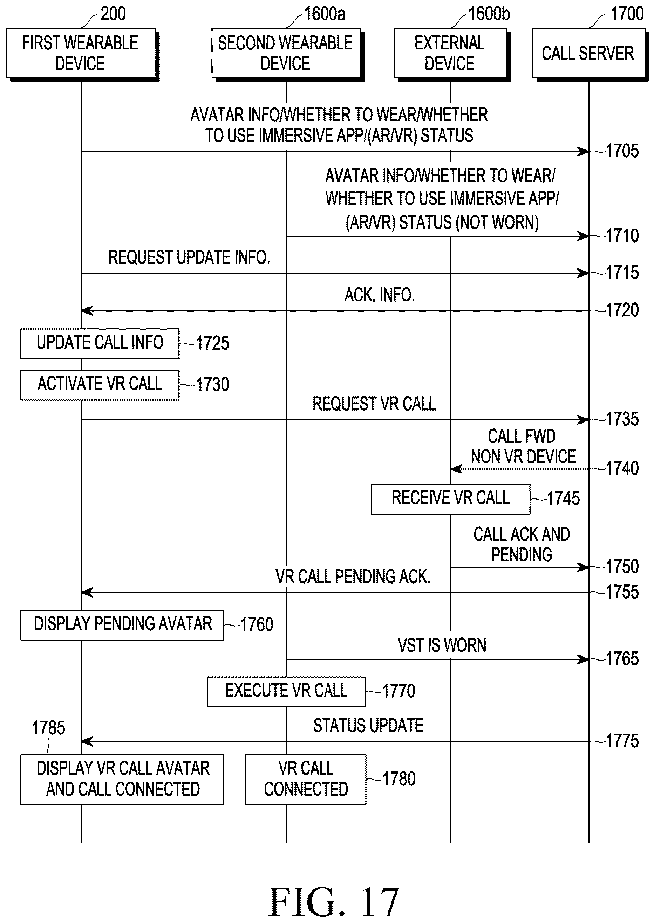

FIG. 15 is a flowchart illustrating an example operation of transmitting call information to an external device so that call information is provided from the external device operably connected to a wearable device 200 of a counterpart when a call occurrence event is identified while the counterpart is not wearing the wearable device 200 according to various embodiments. FIGS. 16A and 16B are diagrams illustrating the operation described in FIG. 15 from the perspective of a user interface according to various embodiments. FIG. 17 is a signal flow diagram illustrating the operation described with reference to FIG. 15 according to various embodiments.

In the following, each operation may be performed sequentially, but is not necessarily performed sequentially. For example, the order of the operations may be changed, and at least two operations may be performed in parallel.

According to an embodiment, it may be understood that operations 1510 to 1520 are performed by at least one processor individually and/or collectively (e.g., the processor 120 of FIG. 1) of a wearable device (e.g., the wearable device 200 of FIGS. 2A to 2C).

Referring to FIG. 15, in operation 1510, the wearable device 200 according to an embodiment of the disclosure may identify the occurrence of a call reception event while the wearable device 200 is not worn. In operation 1520, the wearable device 200 according to an embodiment of the disclosure may transmit call occurrence information to an external electronic device so that information about the generated call event is displayed on the external device operably connected to the wearable device 200. According to an embodiment, when the wearable device 200 and the external device belong to the same network, the information about the generated call event may be transmitted to the external device through the network (e.g., through the server), even if the wearable device 200 and the external device do not directly communicate with each other. As illustrated in FIG. 16A, the wearable device 200 according to an embodiment of the disclosure may transmit call occurrence information from an external device operably connected to the wearable device 200 to the external electronic device to display information about the generated call event. In this case, a second external device 1600 (e.g., a smartphone) according to an embodiment of the disclosure may display information indicating that a video call request is obtained from the counterpart. The information indicating that the video call request is obtained according to an embodiment of the disclosure may include a guide message 1610, a first object 1620 for performing a video call in the second external device 1600, a second object 1630 for rejecting call reception, and/or a third object 1640 for performing a voice call. As illustrated in FIG. 16B, when it is monitored that the user wears the wearable device 200, the wearable device 200 according to an embodiment of the disclosure may perform a video call with the counterpart who has sent the call. The call information according to an embodiment of the disclosure may be directly transmitted from the call server to the external device.

In the following, each operation may be performed sequentially, but is not necessarily performed sequentially. For example, the order of the operations may be changed, and at least two operations may be performed in parallel.

Referring to FIG. 17, in operation 1705, a first wearable device 200 according to an embodiment of the disclosure may transmit information (e.g., avatar information, information about whether to wear, information about whether to use an immersive application, and information about an AR/VR status) for a video call to the call server 1700. The call server 1700 according to an embodiment of the disclosure may include various types of servers such as an IMS server and an application server.

In operation 1710, the second wearable device 1600a according to an embodiment of the disclosure may transmit information for the video call (e.g., avatar information, information about whether to wear, information about whether to use an immersive application, and information about an AR/VR status) to the call server 1700.

In operation 1715, the first wearable device 200 according to an embodiment of the disclosure may request the call server to update information about another user and/or device (e.g., information about the second wearable device 1600a) periodically or aperiodically (e.g., when the user's wearing is detected). In response thereto, the call server 1700 according to an embodiment of the disclosure may provide a response in operation 1720.

In operation 1725, the first wearable device 200 according to an embodiment of the disclosure may update information for a video call. In operation 1730, the first wearable device 200 according to an embodiment of the disclosure may obtain a user input for activating a video call. In operation 1735, the first wearable device 200 according to an embodiment of the disclosure may transmit a request for a video call to the call server 1700. In operation 1740, the call server 1700 according to an embodiment of the disclosure may directly transmit the call information to the external device 1600b because the counterpart of the call transmission is not wearing the second wearable device 1600a. The external device 1600b according to an embodiment of the disclosure may obtain information about the video call in operation 1745, and may transmit a response to the call server 1700 in operation 1750. The call server 1700 according to an embodiment of the disclosure may transmit information indicating that the video call is pending to the first wearable device 200 in operation 1755. In operation 1760, the first wearable device 200 according to an embodiment of the disclosure may display an avatar in a pending state (e.g., displaying the avatar in a pending mode such as lingering around). When the wearing by the user is detected in operation 1765, the second wearable device 1600a according to an embodiment of the disclosure may transmit information indicating that the user wears the wearable device to the call server 1700. The second wearable device 1600a according to an embodiment of the disclosure may perform a video call in operation 1770. In operation 1775, the call server according to an embodiment of the disclosure may update the state information about the second wearable device 1600a and may transmit the updated state information to the first wearable device 200. The first wearable device 200 and the second wearable device 1600a according to an embodiment of the disclosure may perform a video call in operations 1780 and 1785.

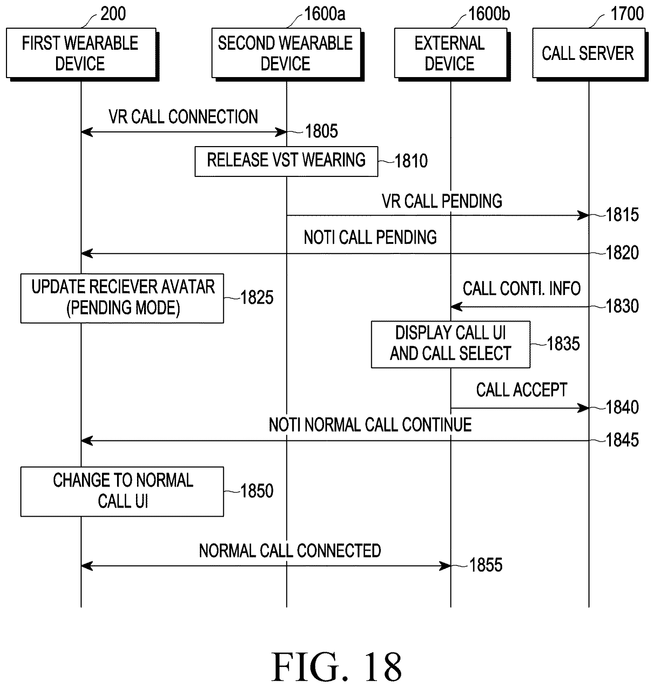

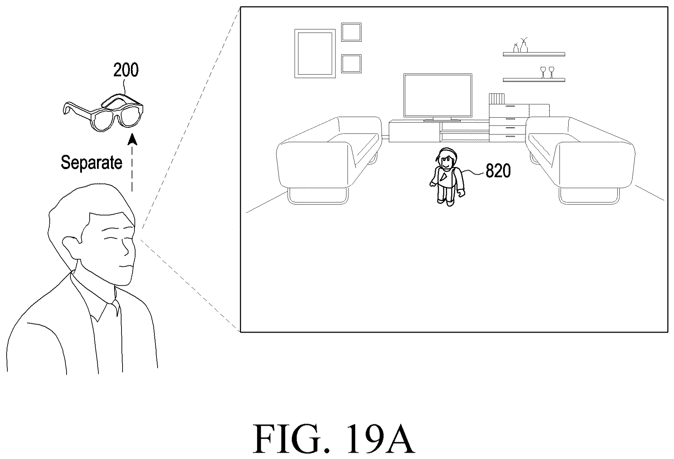

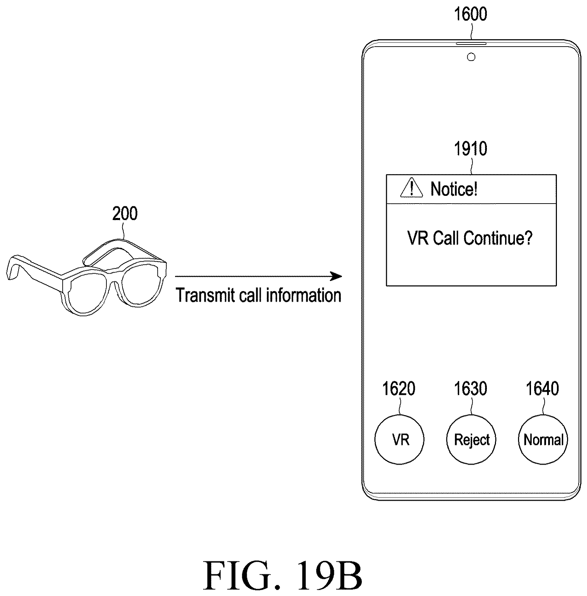

FIG. 18 is a signal flow diagram illustrating an example operation performed when a wearable device is separated from a user while a call is being performed according to various embodiments. FIGS. 19A and 19B are diagrams illustrating the operation described with reference to FIG. 18 from the perspective of a user interface according to various embodiments.

In the following, each operation may be performed sequentially, but is not necessarily performed sequentially. For example, the order of the operations may be changed, and at least two operations may be performed in parallel.

Referring to FIG. 18, a first wearable device 200 and a second wearable device 1600a according to an embodiment of the disclosure may perform a video call in operation 1805. In operation 1810, the second wearable device 1600a according to an embodiment of the disclosure may detect that the wearable device is separated from the user. As illustrated in FIG. 19A, the second wearable device 1600a according to an embodiment of the disclosure may detect that the wearable device is separated from the user. In operation 1815, the second wearable device 1600a according to an embodiment of the disclosure may transmit a request for stopping the video call to the call server 1700. The call server 1700 according to an embodiment of the disclosure may transmit the pending of the call to the first wearable device 200 in operation 1820. The first wearable device 200 according to an embodiment of the disclosure may update the state of the avatar in operation 1825. For example, the first wearable device 200 according to an embodiment of the disclosure may display the avatar in the pending mode. In operation 1830, the call server 1700 according to an embodiment of the disclosure may transmit, to the external device 1600b, a guide message inquiring whether to continue to perform the call. In operation 1835, the external device 1600b according to an embodiment of the disclosure may provide a guide message inquiring the user about whether to continue the call. The external device 1600b according to an embodiment of the disclosure may provide a guide message as illustrated in FIG. 19B. In operation 1840, the external device 1600b according to an embodiment of the disclosure may transmit a call accept response to the call server 1700. When the external device 1600b obtains a user input for performing a normal voice call, in operation 1845, the call server 1700 according to an embodiment of the disclosure may transmit, to the first wearable device 200, a guide message for continuing the call as the voice call. In operation 1850, the first wearable device 200 according to an embodiment of the disclosure may switch from a video call to a voice call. The first wearable device 200 and the external device 1600b according to an embodiment of the disclosure may continuously perform the call as the voice call in operation 1855.

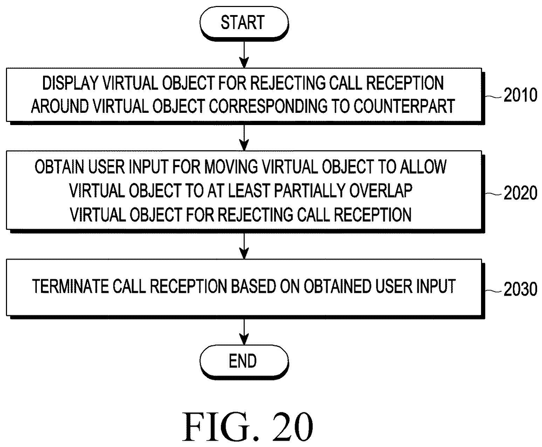

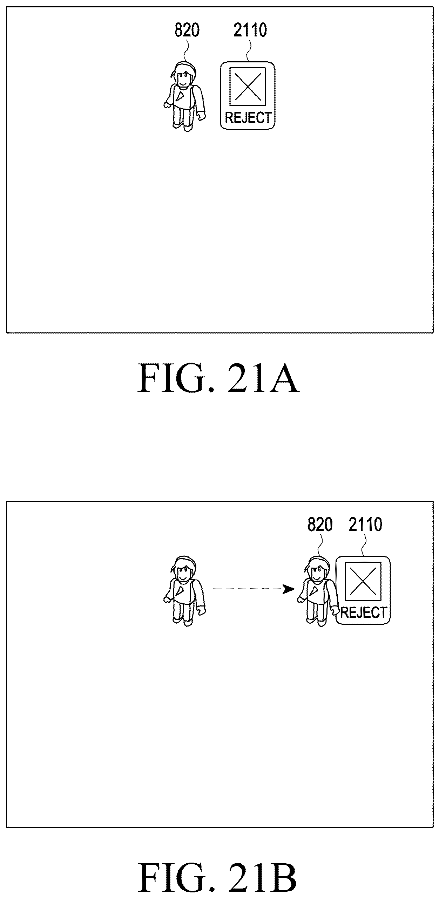

FIG. 20 is an flowchart illustrating an example operation of displaying another virtual object for rejecting call reception around a virtual object by a wearable device 200 according to various embodiments. FIGS. 21A and 21B are diagrams illustrating the operation described with reference to FIG. 20 from the perspective of a user interface according to various embodiments.

In the following, each operation may be performed sequentially, but is not necessarily performed sequentially. For example, the order of the operations may be changed, and at least two operations may be performed in parallel.

According to an embodiment, it may be understood that operations 2010 to 2030 are performed by at least one processor individually and/or collectively (e.g., the processor 120 of FIG. 1) of a wearable device (e.g., the wearable device 200 of FIGS. 2A to 2C).

In operation 2010, the wearable device 200 according to an embodiment of the disclosure may display a virtual object (e.g., the second virtual object 2110) for rejecting call reception around the virtual object (e.g., the second avatar 820) corresponding to the counterpart. As illustrated in FIG. 21A, the wearable device 200 according to an embodiment of the disclosure may display a virtual object (e.g., the second virtual object 2110) for rejecting call reception around the virtual object (e.g., the second avatar 820) corresponding to the counterpart. In operation 2020, the wearable device 200 according to an embodiment of the disclosure may obtain a user input for moving the virtual object so that the virtual object at least partially overlaps the virtual object for rejecting call reception. As illustrated in FIG. 21B, the wearable device 200 according to an embodiment of the disclosure may obtain a user input for moving the virtual object so that the virtual object at least partially overlaps the virtual object for rejecting call reception. In operation 2030, the wearable device 200 according to an embodiment of the disclosure may terminate call reception based on a user input obtained according to operation 2020.

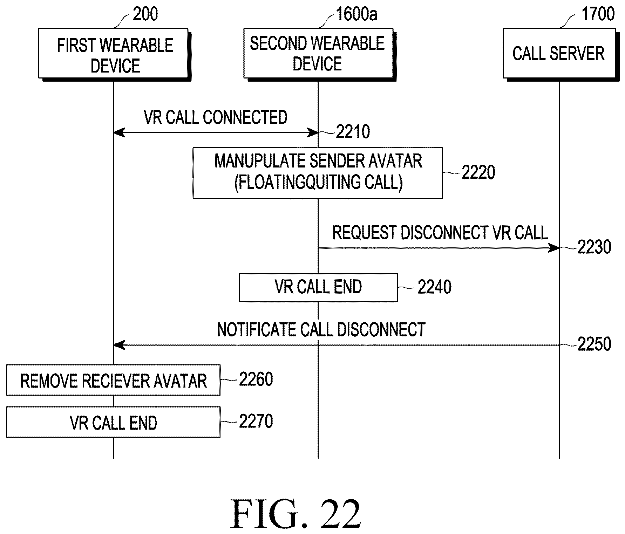

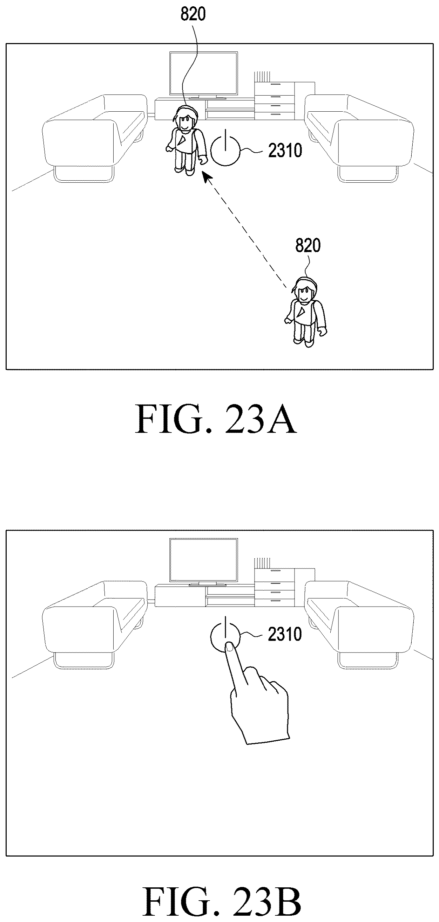

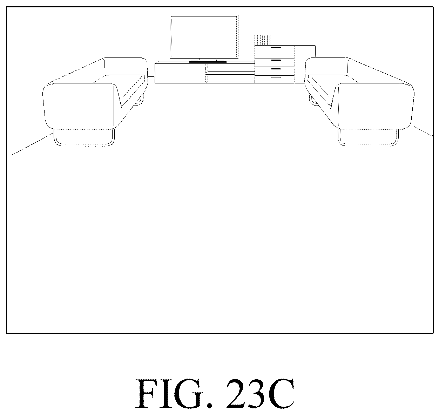

FIG. 22 is a signal flow diagram illustrating an example operation of terminating a call by controlling a virtual object according to various embodiments. FIGS. 23A, 23B and 23C are diagrams illustrating the operation described with reference to FIG. 22 from the perspective of a user interface according to various embodiments.

In the following, each operation may be performed sequentially, but is not necessarily performed sequentially. For example, the order of the operations may be changed, and at least two operations may be performed in parallel.

Referring to FIG. 22, a first wearable device 200 and a second wearable device 1600a according to an embodiment of the disclosure may perform a video call in operation 2210. In operation 2220, the second wearable device 1600a according to an embodiment of the disclosure may obtain a user input for controlling an avatar (e.g., the second avatar 820). As illustrated in FIG. 23A, the second wearable device 1600a according to an embodiment of the disclosure may obtain a user input for moving the avatar (e.g., the second avatar 820) to a designated position. In operation 2230, the second wearable device 1600a according to an embodiment of the disclosure may transmit a request for terminating the video call to the call server 1700. When the movement of the avatar is detected, the second wearable device 1600a according to an embodiment of the disclosure may display a floating object 2310 around the avatar (e.g., the second avatar 820) as illustrated in FIG. 23A. The second wearable device 1600a according to an embodiment of the disclosure may obtain a user input to the floating object 2310 as illustrated in FIG. 23B. Based on such a user input, the second wearable device 1600a according to an embodiment of the disclosure may transmit a request for terminating the video call to the call server 1700 in operation 2230. The second wearable device 1600a according to an embodiment of the disclosure may terminate the video call in operation 2240. In operation 2250, the call server 1700 according to an embodiment of the disclosure may transmit a guide message indicating that the video call is terminated to the first wearable device 200. In operation 2260, as illustrated in FIG. 23C, the first wearable device 200 according to an embodiment of the disclosure may terminate the video call in operation 2270 without displaying the avatar (e.g., the first avatar 520).

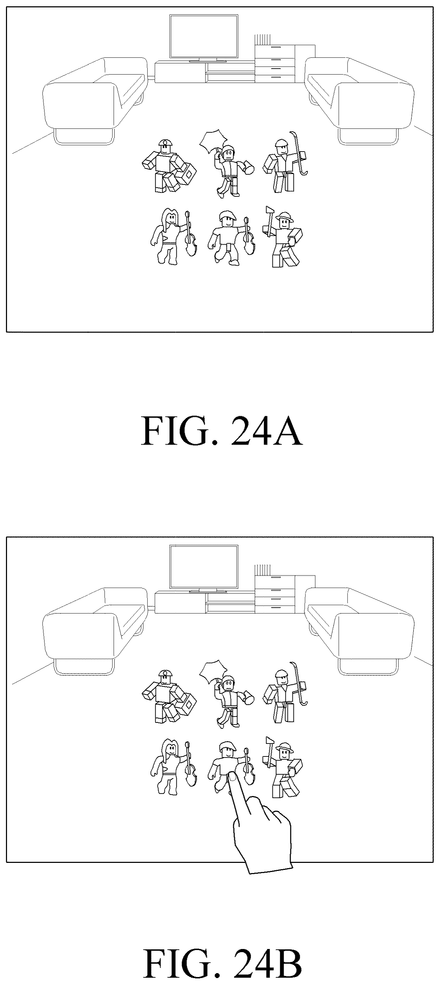

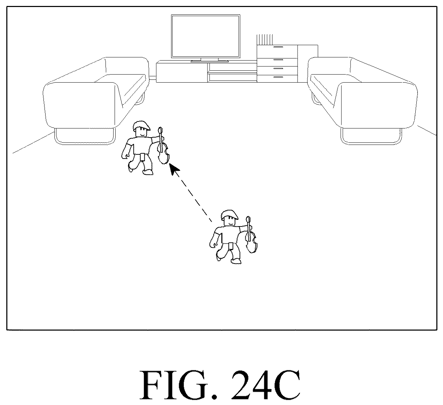

FIGS. 24A, 24B and 24C are diagrams illustrating an example operation of displaying avatars instead of a call application execution screen and sending a call by controlling any one of the displayed avatars according to various embodiments.

Referring to FIGS. 24A, 24B and 24C (which may be referred to as FIGS. 24A to 24C), the wearable device 200 according to an embodiment of the disclosure may display a plurality of avatars instead of the execution screen 510 of the call application. As illustrated in FIG. 24B, the wearable device 200 according to an embodiment of the disclosure may obtain a user input for moving any one avatar. As illustrated in FIG. 24C, the wearable device 200 according to an embodiment of the disclosure may perform a video call with the counterpart corresponding to the selected avatar.

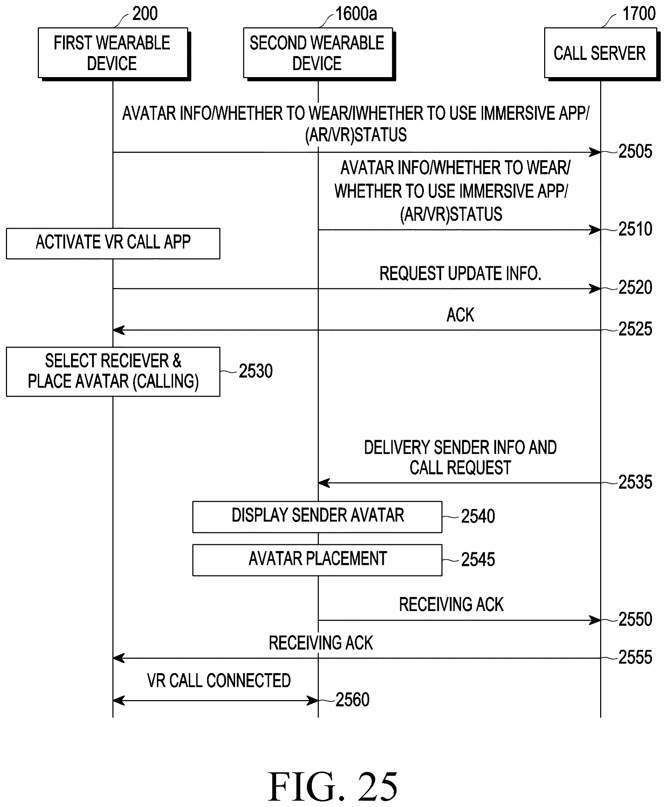

FIG. 25 is a signal flow diagram illustrating an example operation of transmitting and receiving a call according to various embodiments.

In the following, each operation may be performed sequentially, but is not necessarily performed sequentially. For example, the order of the operations may be changed, and at least two operations may be performed in parallel.

Referring to FIG. 25, in operation 2505, the first wearable device 200 according to an embodiment of the disclosure may transmit information (e.g., avatar information, information about whether to wear, information about whether to use an immersive application, and information about an AR/VR status) for a video call to the call server 1700. The call server 1700 according to an embodiment of the disclosure may include various types of servers such as an IMS server and an application server. In operation 2510, the second wearable device 1600a according to an embodiment of the disclosure may transmit information for the video call (e.g., avatar information, information about whether to wear, information about whether to use an immersive application, and information about an AR/VR status) to the call server 1700. In operation 2520, the first wearable device 200 according to an embodiment of the disclosure may request the call server to update information about another user and/or device (e.g., information about the second wearable device 1600a) periodically or aperiodically (e.g., when the user's wearing is detected). In response thereto, the call server 1700 according to an embodiment of the disclosure may provide a response in operation 2525. In operation 2530, the first wearable device 200 according to an embodiment of the disclosure may obtain a user gesture for moving the avatar to a designated position. In operation 2535, the call server 1700 according to an embodiment of the disclosure may transmit caller information to the second wearable device 1600a. In operation 2540, the second wearable device 1600a according to an embodiment of the disclosure may display the avatar (e.g., the second avatar 820) corresponding to the caller. In operation 2545, the second wearable device 1600a according to an embodiment of the disclosure may obtain a user input for moving the avatar. In operation 2550, the second wearable device 1600a according to an embodiment of the disclosure may transmit a message indicating that the avatar has been moved to the call server 1700. In operation 2555, the call server 1700 according to an embodiment of the disclosure may transmit a call reception response to the first wearable device 200. The first wearable device 200 and the second wearable device according to an embodiment of the disclosure may perform a video call in operation 2560.

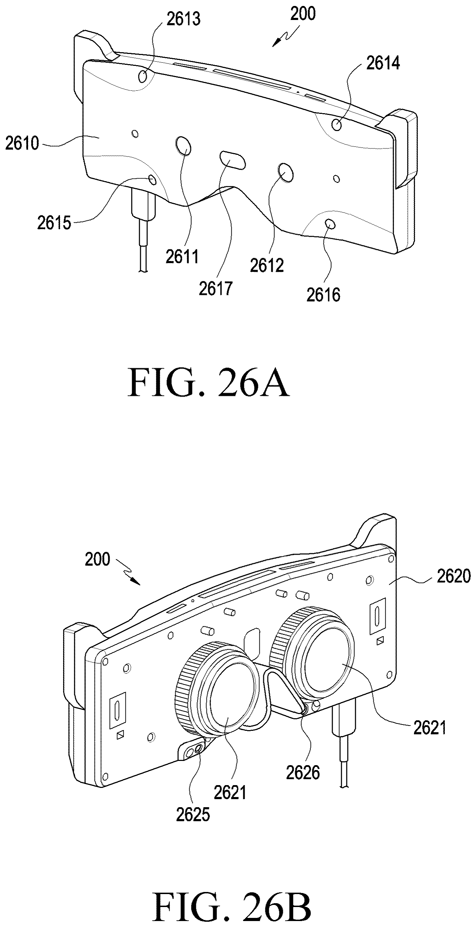

FIGS. 26A and 26B are perspective views illustrating an example wearable device according to various embodiments.

Referring to FIGS. 26A and 26B, in an embodiment, camera modules 2611, 2612, 2613, 2614, 2615, and 2616 and/or a depth sensor 2617 for obtaining information related to the surrounding environment of the wearable device 200 may be disposed on a first surface 2610 of the housing. In an embodiment, the camera modules 2611 and 2612 may obtain an image related to the surrounding environment of the wearable device. In an embodiment, the camera modules 2613, 2614, 2615, and 2616 may obtain an image while the wearable device 200 is worn by the user. The image obtained through the camera modules 2613, 2614, 2615, and 2616 may be used for simultaneous localization and mapping (SLAM), 6 degrees of freedom (6DoF), 3 degrees of freedom (3DoF), subject recognition, and/or tracking, and may be used as an input of the wearable electronic device by recognizing and/or tracking the user's hand. In an embodiment, the depth sensor 2617 may be configured to transmit a signal and receive a signal reflected from an object and be used for identifying the distance to the object, such as time of flight (TOF). According to an embodiment, camera modules 2625 and 2626 for face recognition and/or a display 2621 (and/or lens) may be disposed on the second surface 2620 of the housing. In an embodiment, the face recognition camera modules 2625 and 2626 adjacent to the display may be used for recognizing the user's face or may recognize and/or track both eyes of the user. In an embodiment, the display 2621 (and/or lens) may be disposed on the second surface 2620 of the wearable device 200. In an embodiment, the wearable device 200 may not include the camera modules 2615 and 2616 among the plurality of camera modules 2613, 2614, 2615, and 2616. Although not shown in FIGS. 26A and 26B, the wearable device 200 may further include at least one of the components shown in FIGS. 2A to 2C. As described above, according to an embodiment, the wearable device 200 may have a form factor to be worn on the user's head. The wearable device 200 may further include a strap and/or a wearing member (e.g., the wearing member 203) to be fixed on the user's body part. The wearable device 200 may provide the user experience based on augmented reality, virtual reality, and/or mixed reality while worn on the user's head.

A wearable device according to an example embodiment of the disclosure may comprise a display, memory, and at least one processor comprising processing circuitry.

According to an example embodiment, the memory may store instructions that may be executed by the processor, at least one processor, individually and/or collectively, may be configured to cause the wearable device to obtain a first input for sending a call.

According to an example embodiment, at least one processor, individually and/or collectively, may be configured to cause the wearable device to, based on the first input, control the display to display a first virtual object corresponding to a counterpart of the call to a user wearing the wearable device.

According to an example embodiment, at least one processor, individually and/or collectively, may be configured to cause the wearable device to obtain a second input for moving the first virtual object to a designated position in a real world or virtual reality.

According to an example embodiment, at least one processor, individually and/or collectively, may be configured to cause the wearable device to perform the call with the counterpart based on the second user input.

According to an example embodiment, the first input may include a virtual touch input to an execution screen of a call application shown to the user as a virtual object.

According to an example embodiment, at least one processor, individually and/or collectively, may be configured to cause the wearable device to transmit information indicating that the wearable device is worn by a user to an external device operably connected to the wearable device when it is detected that the wearable device is worn by the user.

According to an example embodiment, at least one processor, individually and/or collectively, may be configured to cause the wearable device to obtain information about whether a wearable device of the counterpart is worn by the counterpart in response to the transmission of the information.

According to an example embodiment, at least one processor, individually and/or collectively, may be configured to cause the wearable device to control the display to display a designated visual effect around the first virtual object based on obtaining information indicating that the wearable device is not worn by the counterpart.

According to an example embodiment, the first virtual object may be moved according to the user's gaze and shown to the user.

According to an example embodiment, based on the call being connected to the counterpart, a position of the first virtual object may be fixed in the real world or the virtual reality and shown to the user.

A wearable device according to an example embodiment of the disclosure may comprise a display, memory, and at least one processor comprising processing circuitry.

According to an embodiment, the memory may store instructions that may be executed by the processor, at least one processor, individually and/or collectively, may be configured to cause the wearable device to identify reception of a call request from a counterpart.

According to an example embodiment, at least one processor, individually and/or collectively, may be configured to cause the wearable device to, based on the identification of the reception of the call request, control the display to display a second virtual object corresponding to the counterpart to a user of the wearable device.

According to an example embodiment, at least one processor, individually and/or collectively, may be configured to cause the wearable device to obtain an input for moving the second virtual object to a first designated position in a real world or virtual reality.

According to an example embodiment, at least one processor, individually and/or collectively, may be configured to cause the wearable device to perform the call with the counterpart transmitting the call request based on obtaining the input.

According to an example embodiment, at least one processor, individually and/or collectively, may be configured to cause at least one processor, individually and/or collectively, may be configured to cause the wearable device to perform a video call with the counterpart based on identifying that the second virtual object is moved to the first designated position.

According to an example embodiment, at least one processor, individually and/or collectively, may be configured to cause the wearable device to perform a voice call with the counterpart based on identifying that the second virtual object is moved to a second designated position different from the first designated position.

According to an example embodiment, at least one processor, individually and/or collectively, may be configured to cause the wearable device to perform the video call based on changing a shape of the second virtual object into a third virtual object based on identifying that the second virtual object is moved around an object capable of interaction with the second virtual object.

According to an example embodiment, at least one processor, individually and/or collectively, may be configured to cause the wearable device to control the display to display a visual effect indicating each of the first designated area and the second designated area to the user in the real world.

According to an example embodiment, at least one processor, individually and/or collectively, may be configured to cause the wearable device to control the display to further display a visual object for rejecting the call around the second virtual object to the user.

According to an example embodiment, at least one processor, individually and/or collectively, may be configured to cause the wearable device to transmit information about the call request to an external device operably connected to the wearable device based on identifying that the user is not wearing the wearable device based on the call request being received.

According to an example embodiment, at least one processor, individually and/or collectively, may be configured to cause the wearable device to control the display to display the second object to the user in the real world or the virtual reality based on identifying that the user wears the wearable device based on information about the call request being provided through the external device.

According to an example embodiment, at least one processor, individually and/or collectively, may be configured to cause the wearable device to transmit information related to the call to the external device to provide information about the call through the external device operably connected to the wearable device based on identifying that the wearable device is separated from the user while performing the call.

According to an example embodiment, the second virtual object may be moved according to the user's gaze and shown to the user.

According to an example embodiment, based on the call being connected to the counterpart, a position of the second virtual object may be fixed in the real world or the virtual reality and shown to the user.

According to an example embodiment, at least one processor, individually and/or collectively, may be configured to cause the wearable device to control the display to display a visual object for terminating the call to the user around the second virtual object based on identifying that an input to the second virtual object is obtained while performing the call.

According to an example embodiment, the second virtual object may be changed according to biometric information about the counterpart of the call and shown to the user.

According to an example embodiment, in a non-transitory computer-readable recording medium storing one or more programs, the one or more programs may comprise instructions that, when executed by at least one processor of the wearable electronic device, individually and/or collectively, cause the wearable electronic device to obtain a first input for sending a call.

According to an example embodiment, the one or more programs may comprise instructions that, when executed by at least one processor of the wearable electronic device, individually and/or collectively, cause the wearable electronic device to, based on the first input, control the display to display a first virtual object corresponding to a counterpart of the call to a user wearing the wearable device.

According to an example embodiment, the one or more programs may comprise instructions that, when executed by at least one processor of the wearable electronic device, individually and/or collectively, cause the wearable electronic device to obtain a second input for moving the first virtual object to a designated position in a real world or virtual reality.

According to an example embodiment, the one or more programs may comprise instructions that, when executed by at least one processor of the wearable electronic device, individually and/or collectively, cause the wearable electronic device to perform the call with the counterpart based on the second user input.

According to an example embodiment, the first input may include a virtual touch input to an execution screen of a call application shown to the user as a virtual object.

According to an example embodiment, the one or more programs may further store instructions that, when executed by at least one processor of the wearable electronic device, individually and/or collectively, cause the wearable device to transmit information indicating that the wearable device is worn by a user to an external device operably connected to the wearable device based on detecting that the wearable device is worn by the user.

According to an example embodiment, the one or more programs may further store instructions that, when executed by at least one processor of the wearable electronic device, individually and/or collectively, cause the wearable device to obtain information about whether a wearable device of the counterpart is worn by the counterpart in response to the transmission of the information.

According to an example embodiment, the one or more programs may further store instructions that, when executed by at least one processor of the wearable electronic device, individually and/or collectively, cause the wearable device to control the display to display a designated visual effect around the first virtual object when obtaining information indicating that the wearable device is not worn by the counterpart.

According to an example embodiment, the first virtual object may be moved according to the user's gaze and shown to the user.

According to an example embodiment, based on the call being connected to the counterpart, a position of the first virtual object may be fixed in the real world or the virtual reality and shown to the user.

According to an example embodiment, the one or more programs may comprise instructions that, when executed by at least one processor of the wearable electronic device, individually and/or collectively, cause the wearable electronic device to identify reception of a call request from a counterpart.

According to an example embodiment, the one or more programs may comprise instructions that, when executed by at least one processor of the wearable electronic device, individually and/or collectively, cause the wearable electronic device to, based on the identification of the reception of the call request, control the display to display a second virtual object corresponding to the counterpart to a user of the wearable device.

According to an example embodiment, the one or more programs may comprise instructions that, when executed by at least one processor of the wearable electronic device, individually and/or collectively, cause the wearable electronic device to obtain an input for moving the second virtual object to a first designated position in a real world or virtual reality.

According to an example embodiment, the one or more programs may comprise instructions that, when executed by at least one processor of the wearable electronic device, individually and/or collectively, cause the wearable electronic device to perform the call with the counterpart transmitting the call request based on obtaining the input.

According to an example embodiment, the one or more programs may further store instructions that that, when executed by at least one processor of the wearable electronic device, individually and/or collectively, cause the wearable device to perform a video call with the counterpart based on identifying that the second virtual object is moved to the first designated position.

According to an example embodiment, the one or more programs may further store instructions that, when executed by at least one processor of the wearable electronic device, individually and/or collectively, cause the wearable device to perform a voice call with the counterpart based on identifying that the second virtual object is moved to a second designated position different from the first designated position.

According to an example embodiment, the one or more programs may further store instructions that, when executed by at least one processor of the wearable electronic device, individually and/or collectively, cause the wearable device to perform the video call based on changing a shape of the second virtual object into a third virtual object when identifying that the second virtual object is moved around an object capable of interaction with the second virtual object.

According to an example embodiment, the one or more programs may further store instructions that, when executed by at least one processor of the wearable electronic device, individually and/or collectively, cause the wearable device to control the display to display a visual effect indicating each of the first designated area and the second designated area to the user in the real world.

According to an example embodiment, the one or more programs may further store instructions that, when executed by at least one processor of the wearable electronic device, individually and/or collectively, cause the wearable device to control the display to further display a visual object for rejecting the call around the second virtual object to the user.

According to an example embodiment, the one or more programs may further store instructions that, when executed by at least one processor of the wearable electronic device, individually and/or collectively, cause the wearable device to transmit information about the call request to an external device operably connected to the wearable device based on identifying that the user is not wearing the wearable device based the call request being received.

According to an example embodiment, the one or more programs may further store instructions that, when executed by at least one processor of the wearable electronic device, individually and/or collectively, cause the wearable device to control the display to display the second object to the user in the real world or the virtual reality based on identifying that the user wears the wearable device while information about the call request is provided through the external device.

According to an example embodiment, the one or more programs may further store instructions that, when executed by at least one processor of the wearable electronic device, individually and/or collectively, cause the wearable device to transmit information related to the call to the external device to provide information about the call through the external device operably connected to the wearable device based on identifying that the wearable device is separated from the user while performing the call.

According to an example embodiment, the second virtual object may be moved according to the user's gaze and shown to the user.

According to an example embodiment, based on the call being connected to the counterpart, a position of the second virtual object may be fixed in the real world or the virtual reality and shown to the user.

According to an example embodiment, the one or more programs may further store instructions that, when executed by at least one processor of the wearable electronic device, individually and/or collectively, cause the wearable device to control the display to display a visual object for terminating the call to the user around the second virtual object based on identifying that an input to the second virtual object is obtained while performing the call.

According to an example embodiment, the second virtual object may be changed according to biometric information about the counterpart of the call and shown to the user.

The electronic device according to various embodiments of the disclosure may be one of various types of electronic devices. The electronic devices may include, for example, a portable communication device (e.g., a smart phone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used herein, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment of the disclosure, each component (e.g., a module or a program) of the above-described components may include a single entity or multiple entities. Some of the plurality of entities may be separately disposed in different components. According to an embodiment of the disclosure, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment of the disclosure, operations performed by the module, the program, or another component may be carried out sequentially, in parallel, repeatedly, or heuristically, or one or more of the operations may be executed in a different order or omitted, or one or more other operations may be added.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. A wearable device comprising:
a display,
memory; and
at least one processor,
wherein the memory stores instructions that, when executed by the at least one processor, cause the wearable device to:
obtain a first user input for sending a call to a counterpart device;
based on the first user input, control the display to display a first virtual object corresponding to the counterpart device of the call;
obtain a second user input for moving the first virtual object to a specified position; and
perform the call with the counterpart device based on the second user input.

2. The wearable device of claim 1,
wherein the first user input includes a virtual touch input to an execution screen of a call application.

3. The wearable device of claim 1 or 2,
wherein the instructions cause the wearable device to transmit first information indicating that the wearable device is worn by a user to an external device operably connected to the wearable device when it is detected that the wearable device is worn by the user.

4. The wearable device of any one of claims 1 to 3,
wherein the instructions cause the wearable device to obtain second information about whether the counterpart device is worn by a counterpart user in response to the transmission of the first information.

5. The wearable device of any one of claims 1 to 4,
wherein the instructions cause the wearable device to control the display to display a specified visual effect around the first virtual object when obtaining the second information indicating that the counterpart device is not worn by the counterpart user.

6. The wearable device of any one of claims 1 to 5,
wherein the first virtual object is moved according to a user's gaze.

7. The wearable device of any one of claims 1 to 6,
wherein, when the call is connected to the counterpart device, a position of the first virtual object is fixed.

8. A wearable device comprising:
a display,
memory; and
at least one processor,
wherein the memory stores instructions that, when executed by the at least one processor, cause the wearable device to:
identify reception of a call request from a counterpart device;
based on the identification of the reception of the call request, control the display to display a second virtual object corresponding to the counterpart device;
obtain a first user input for moving the second virtual object to a first position; and
perform the call with the counterpart device transmitting the call request based on obtaining the first user input.

9. The wearable device of claim 8,
wherein the instructions cause the wearable device to perform a video call with the counterpart device when identifying that the second virtual object is moved to the first position.

10. The wearable device of claim 8 or 9,
wherein the instructions cause the wearable device to perform a voice call with the counterpart device when identifying that the second virtual object is moved to a second position different from the first position.

11. The wearable device of any one of claims 8 to 10,
wherein the instructions cause the wearable device to perform the video call after changing the second virtual object to a third virtual object, when identifying that the second virtual object is moved around an object capable of interaction with the second virtual object.

12. The wearable device of any one of claims 8 to 11,
wherein the instructions cause the wearable device to control the display to display a visual effect indicating each of the first position and the second position to the user.

13. The wearable device of any one of claims 8 to 12,
wherein the instructions cause the wearable device to control the display to further display a visual object for rejecting the call around the second virtual object.

14. The wearable device of any one of claims 8 to 13,
wherein the instructions cause the wearable device to transmit third information about the call request to an external device operably connected to the wearable device when identifying that a user of the wearable device is not wearing the wearable device when the call request is received.

15. The wearable device of any one of claims 8 to 14,
wherein the instructions cause the wearable device to control the display to display the second object to the user when identifying that the user wears the wearable device while the third information about the call request is provided through the external device.
